# EUROPEAN PATENT SPECIFICATION

(11) **EP 4 463 502 B1**
(45) Date of publication and mention of the grant of the patent: **24.12.2025**
(21) Application number: 23700508.7
(22) Date of filing: 10.01.2023
(51) Int. Cl.: C08G 64/06, C08G 64/30

(54) **PROCESS FOR PREPARING A POLYCARBONATE BY FRIEDEL-CRAFTS ALKYLATION**
VERFAHREN ZUR HERSTELLUNG EINES POLYCARBONATS DURCH FRIEDEL-CRAFTS-ACYLIERUNG
PROCÉDÉ DE PRÉPARATION D'UN POLYCARBONATE PAR ACYLATION DE FRIEDEL-CRAFTS

(30) Priority: 14.01.2022 EP 22151618
(43) Date of publication of application: 20.11.2024
(73) Proprietor: Covestro Deutschland AG, 51373 Leverkusen (DE)
(72) Inventor: GARSKA, Bernd, 51103 Köln (DE); HEIJL, Jan, 2040 Antwerpen (BE); MAMPUYS, Pieter, 2240 Zandhoven (BE); MAES, Bert, 2610 Wilrijk (BE)
(74) Representative: Levpat
(86) International application number: PCT/EP2023/050380
(87) International publication number: WO 2023/135106

(56) References cited:
- JP-A- 2002 095 971
- US-A1- 2020 115 494
- US-B2- 8 962 788
- MUKAIYAMA T ET AL: "Diphenylboryl Hexachloroantimonate Promoted Friedel-Crafts Acylation Reaction", CHEMISTRY LETTERS, CHEMICAL SOCIETY OF JAPAN,NIPPON KAGAKUKAI, JP, 1 January 1986 (1986-01-01), pages 165 - 168, XP009121397, ISSN: 0366-7022, DOI: 10.1246/CL.1986.165

## Description

The present invention relates to a process for preparing a polycarbonate using electrophilic aromatic substitution, comprising a reaction of a diaryl carbonate with a structure of formula (I) and a primary alkyl halide with a structure of formula (IIa) or (IIb) as described below. Furthermore, the invention relates to a polycarbonate comprising a repeating unit with a structure of formula (III) as described below.

Polycarbonates, in particular aromatic polycarbonates, are known to exhibit improved mechanical and optical properties, heat resistance and weatherability. Due to such a property profile, polycarbonates are employed in various indoor and outdoor applications. Typically, polycarbonates are prepared by the generally known interphase phosgenation process or *via* melt transesterification. Both processes employ bisphenols, e.g. bisphenol A ((2,2-bis(4-hydroxyphenol)propane), reacting either with phosgene or a diaryl carbonate (cf. for example US8,962,788B2) to result in a polymeric structure. This means that typically the polymeric backbone is defined by the structure of the diol and the carbonate group, being introduced into said backbone by the polymerization reaction itself. Employing aromatic diols such as bisphenol A, bisphenol B, bisphenol C, bisphenol E, bisphenol F, bisphenol G, bisphenol M, bisphenol P, bisphenol TMC, bisphenol Z and e. g. specific bisphenols as described in US2020/0115494 A1, backbones may be formed that comprise the carbonate group at the aromatic ring. Said carbonate group is located *para* to the at least one other substituent at the aromatic ring which, depending on the structure of the diol, connects the carbonate-aromatic ring-group to the next carbonate group in the polycarbonate backbone.

However, there is a constant need for improving the properties of classical aromatic (co)polycarbonates including the use of bio-based aromatic diols. Thus, developing alternative synthesis routes besides the classical interphase phosgenation or melt transesterification processes - enabling to connect aromatic moieties with carbonate groups, raises scientific and economic interests.

Therefore, it is an object of the present invention to provide an alternative process for preparing a polycarbonate. Preferably, it is an object of the present invention to provide a process for preparing a polycarbonate with a repeating unit comprising two aromatic moieties being linked with each other and - within the repeating unit - one of the aromatic moieties being substituted with a carbonate group. More preferably, it is an object of the present invention to provide a process for preparing a polycarbonate with a repeating unit comprising two aromatic moieties being linked with each other and - within the repeating unit - one of the aromatic moieties being substituted with a carbonate group, wherein the carbonate group is introduced to the repeating unit without the need of separately forming the carbonate group. Still preferably, it is an object of the present invention to provide a process for preparing a polycarbonate, including a reaction for the formation of the repeating unit, comprising linking of two aromatic moieties with each other. Such a reaction mandatorily requires that the aromatic moieties comprise carbonate substituents in order to obtain a polycarbonate comprising carbonate groups. Therefore, it is also preferably an object of the present invention to provide a process for preparing a polycarbonate with a repeating unit that comprises two aromatic moieties being linked with each other, and - within the repeating unit - one of the aromatic moieties being substituted with a carbonate group, wherein said carbonate group is not affected by the process as such. In this context the term "affected" preferably means that the carbonate is not degraded.

Besides the above, it is an object of the present invention to provide a polycarbonate, that may be prepared by the process according to the invention. Also, it is an object of the invention to provide a polycarbonate comprising novel chemical and physical properties when compared to polycarbonates known from the state of the art.

A well-known organic reaction is the so-called "Friedel-Crafts alkylation" which is used to attach substituents to an aromatic ring. Generally, the procedure of a "Friedel-Crafts alkylation" involves the alkylation of an aromatic ring with an alkyl halide using a strong Lewis acid, such as aluminum chloride or ferric chloride, the latter acting as catalysts. It is thus a further objective of the present invention to investigate whether the Friedel-Crafts alkylation as such or in an amended way can be used to obtain a polycarbonate.

To date, several scientific studies have shown that the primary alkyl halide 1,4-bis(chloromethyl)benzene (also known as α,α'-dichloro-*p*-xylene) can be used as a coupling agent for a Friedel-Crafts alkylation of aromatic compounds. In particular, the alkylation of 1,4-bis(chloromethyl)benzene has been reported in combination with benzene using different Lewis acids. For example, Darbeau and White have proved this for TiCl₄ (Darbeau and White: A Study of N-Nitrosoamide-Mediated Friedel-Crafts Type Benzylation of Benzene-Toluene and Benzene-Anisole. J. Org. Chem. 2000, 65, 1121-1131.), Hayashi *et al.* for ZnCl₂ (Hayashi et al.: Convenient Preparation of 1,4-Dibenzylbenzene using Zinc Chloride in the Presence of Polar Solvents. Synth. Commun. 1995, 25, 2029-2036.) and Kodomari for CuCl₂ on a Al₂O₃-support (Kodomari: Friedel-Crafts benzylation using alumina-supported copper(II) chloride catalyst. Nippon Kagaku Kaishi 1994, 12, 1137-1139.). JP 2002095971 A describes the reaction in combination with diphenylmethane. Furthermore, the discussed reaction has been reported by Kodomari and Tagushi in combination with biphenyls (Kodomari and Taguchi: Friedel Crafts Arylmethylation of Aromatics with Bis(chloromethyl) benzenes Catalyzed by Zinc Chloride Supported on Silica Gel. J. Chem. Res. Syn. 1996, 5, 240-241.) and by Reyes *et al.* in combination with phenols (Reyes et al.: Synthesis of Tri-Aryl Methane Epoxy Resin Isomers and Their Cure with Aromatic Amines. Macromol. Mat. Engin. 2020, 305, 1900546). Finally, CN 107986946 A describes the reaction in combination with benzenes being substituted with alkoxy groups. However, the reaction has not yet been investigated for coupling two aromatic rings bearing a carbonate group.

1,4-Bis(chloromethyl)benzene has also been employed for the synthesis of similar products using cross-coupling chemistry. Transition metals are used in those cases to achieve a coupling with aryl boronic acids (Chahen et al.: Suzuki Cross-Coupling Reaction of Benzylic Halides with Arylboronic Acids in the Presence of a Tetraphosphine/Palladium Catalyst. Synlett 2003, 11, 1668-1672.). It can also be coupled with aromatic Grignard reactants (Yamato, T.; Sakaue, N.; Suehiro, K.; Tashiro, M., A Convenient Preparation of Diphenylmethanes from Bromobenzenes Using the Grignard Cross-Coupling Reaction. Org. Prep. Proced. Int. 1991, 23, 617-620.) or organolithium derivatives (Bender et al.: Synthesis of oligomeric chains with 9,10-dihydroanthracene units by carbanion alkylation. Chem. Ber. 1988, 121, 1177-1186.) *via* nucleophilic substitution.

Based on this prior art, it was a further object of the present invention to provide a process for preparing a polycarbonate (other than the interphase phosgenation or the melt transesterification method) and to provide a polycarbonate as such, the process and the polycarbonate being based on existing, but also novel aromatic building blocks, especially bio-based building blocks. Preferably, this process should be economically and ecologically beneficial. Moreover, this process preferably should result in a polycarbonate having improved properties, especially with respect to mechanical and/or optical properties, heat resistance and/or weatherability.

At least one of the above-mentioned objects, preferably all of these objects have been solved by the present invention.

Surprisingly, the inventors found a process for preparing a polycarbonate that provides an alternative to known processes such as interphase phosgenation or melt transesterification. More surprisingly, the inventors identified a process for preparing a polycarbonate with a repeating unit comprising two aromatic moieties being linked with each other and - within the repeating unit - one of the aromatic moieties being substituted with a carbonate group. Still surprisingly, the inventors found a process for preparing a polycarbonate with a repeating unit comprising two aromatic moieties being linked with each other and - within the repeating unit - one of the aromatic moieties being substituted with a carbonate group, wherein the carbonate group is introduced to the repeating unit without the need of separately forming the carbonate group. As mentioned, the inventors were able to find a process for preparing a polycarbonate, including a reaction for the formation of the repeating unit, comprising linking of two aromatic moieties with each other. Such a reaction mandatorily requires that the aromatic moieties comprise carbonate substituents in order to form a polymer backbone with repeating units, each repeating unit comprising a carbonate group substituting one of the aromatic moieties. Confronted with this objective, the inventors then identified a process for preparing a polycarbonate with a repeating unit that comprises two aromatic moieties being linked with each other, and - within the repeating unit - one of the aromatic moieties being substituted with a carbonate group, wherein said carbonate group is not affected by the process as such. In this context the term "affected" preferably means that the carbonate is not degraded.

Furthermore, the inventors identified a polycarbonate, obtainable by the process according to the invention. Also, the inventors identified a polycarbonate comprising novel chemical and physical properties when compared to polycarbonates known from the state of the art.

The inventors have identified a process and a polycarbonate, that employ/comprise existing, but also novel aromatic building blocks, especially bio-based building blocks. Also, the inventors identified a process for preparing a polycarbonate with economic and ecologic efforts. The process identified by the inventors results in a polycarbonate having improved properties, in particular with respect to mechanical and/or optical properties, heat resistance and/or weatherability. The same applies to the polycarbonate as such.

Surprisingly, it was identified that the Friedel-Crafts alkylation employing primary alkyl halides, preferably primary alkyl chlorides, with a structure of formula (IIa) or (IIb) and diaryl carbonates with a structure of formula (I) can be used to couple two aromatic moieties bearing a carbonate group, preferably both bearing a carbonate group, with an optionally substituted hydrocarbon bridge comprising alkyl groups and aromatic rings. This reaction as such can be used according to the present invention to polymerize such aromatic moieties to yield a polycarbonate. This reaction can be used for existing building blocks (such as for example diphenyl carbonate), but also for novel, especially bio-based building blocks (such as guaiacol carbonate, also known as bis(2-methoxyphenyl) carbonate). Moreover, the resulting polycarbonate obtained from this process preferably comprises a good property profile, especially with respect to mechanical and/or optical properties, heat resistance and/or weatherability.

**In** a further embodiment of the present invention secondary or tertiary alkyl halides can be used to couple two aromatic moieties bearing a carbonate group, preferably both bearing a carbonate group, with an optionally substituted hydrocarbon bridge comprising alkyl groups and aromatic rings.

Accordingly, the present invention provides a process for preparing a polycarbonate using electrophilic aromatic substitution, comprising a reaction of a compound with a structure of formula (I) 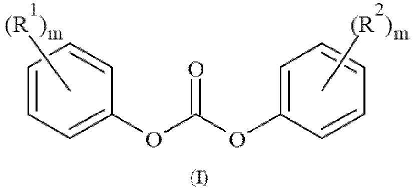 and a compound with a structure of formula (IIa) or (IIb) 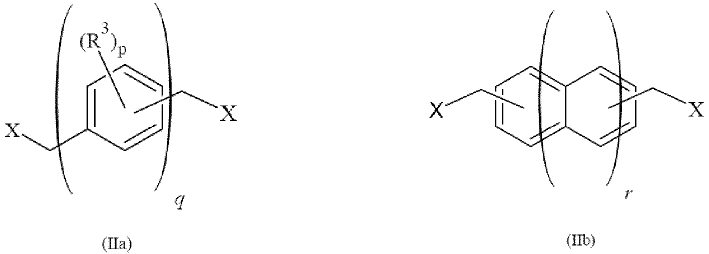 in the presence of a Lewis acid catalyst added in a stoichiometric or substoichiometric amount, yielding a polycarbonate comprising a repeating unit with a structure of formula (III) 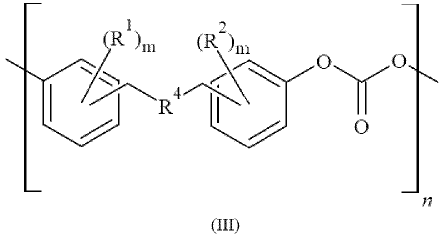 wherein the repeating unit with the structure of formula (III) comprises two aromatic rings, a carbonate group -OC(=O)O- and a linking group -CH₂R⁴CH₂-, wherein one of the two aromatic rings is substituted with the carbonate group, the two aromatic rings are linked *via* the linking group and R⁴ comprises a structure given in {} in formula (IVa) or (IVb), respectively, 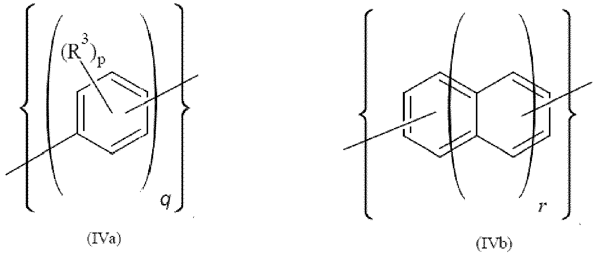 and wherein
- each R¹ and R² independently represents an R¹ substituent and an R² substituent, respectively, being capable of activating the aromatic ring which it substitutes by a mesomeric effect and/or an inductive effect,
- each m independently is 0 to 4, preferably 0 - 3,
- each X independently represents a halogen atom,
- each R³ independently represents an R³ substituent, preferably independently representing an alkyl or alkoxy group having 1 to 6 carbon atoms, a halogen atom or an alkyl group having 1 to 6 carbon atoms and being interrupted by an ester group, more preferably independently representing an alkyl or alkoxy group having 1 to 6 carbon atoms,
- p is 0 to 4,
- q is 1 to 4,
- r is 1 to 3 and
- n is the number of repeating units, preferably 6 to 60.

Polycarbonates in the context of the present invention are either homopolycarbonates or copolycarbonates; the polycarbonates may be linear or branched depending on the type of monomers used in the process of the present invention. For the purpose of the present invention, the expression "bio-based" is understood as meaning that the relevant chemical compound is at the filing date available and/or obtainable *via* a renewable and/or sustainable raw material and/or preferably is such a renewable and/or sustainable raw material. A renewable and/or sustainable raw material is preferably understood as meaning a raw material that is regenerated by natural processes at a rate that is comparable to its rate of depletion (see CEN/TS 16295:2012). The expression is used in particular to differentiate it from raw materials produced from fossil raw materials, also referred to in accordance with the invention as petroleum-based. Whether a raw material is bio-based or petroleum-based can be determined by the measurement of carbon isotopes in the raw material, since the relative amounts of the carbon isotope C¹⁴ are lower in fossil raw materials. This can be done, for example, in accordance with ASTM D6866-18 (2018) or ISO16620-1 to -5 (2015) or DIN SPEC 91236 2011-07. An exemplary bio-based carbonate in the sense of this invention is guaiacol carbonate.

According to the present invention reference is made to an electrophilic aromatic substitution. This process is known to the person skilled in the art and is described in various textbooks dealing with organic chemistry. The process according to the present invention is based on a Friedel-Crafts alkylation reaction, but includes amendments to the classical name reaction. Therefore, reference is rather made to the more general electrophilic aromatic substitution. However, the person skilled in the art knowing and understanding the concepts of the Friedel-Crafts alkylation reaction and once having perceived the present invention can transfer the principles of this general concept to the amendments of the process of the present invention.

Moreover, according to the present invention reference is made to a substituent (of an aromatic ring) being capable of activating the aromatic ring which it substitutes by a mesomeric effect and/or an inductive effect. In the context of an electrophilic aromatic substitution, this concept is known to the person skilled in the art, too.

Preferably, the term "mesomeric effect" or M effect refers to the known resonance effect. Still preferably, the term refers to the delocalization of electrons in a molecule by the interaction of two pi bonds or between a pi bond and a lone pair of electrons present on an adjacent atom. The term is preferably used to describe the electronic effect of a substituent on an aromatic moiety based on relevant resonance structures. It often is symbolized by the letter M. The mesomeric effect can be negative (-M) when the substituent withdraws electrons from the aromatic ring through pi bonds - called resonance electron withdrawal. The effect can also be positive (+M, called resonance electron donation) when the substituent donates electrons through the pi bonds to the aromatic ring.

Preferably, the term "inductive effect" or I effect refers to the displacement of electrons *via* sigma bonds towards a more electronegative atom. Due to the inductive effect one end of a bond obtains a partial positive charge and the other end a partial negative charge. Relative inductive effects of substituents bonded to an aromatic ring are described with reference to hydrogen. For example, a substituent with a +I effect (electron-donating character) donates its sigma electrons to the aromatic ring more strongly than hydrogen will. In contrast, a substituent with a -I effect (electron-withdrawing character) will more strongly withdraw or accept the sigma electrons compared to hydrogen.

The M and I effect in the context of an electrophilic aromatic substitution are known to the person skilled in the art. It is known that existing substituent groups on an aromatic ring affect the overall reaction rate or have a directing effect on the positional isomer of the products that are formed. Here, an electron-donating group preferably is an atom or functional group that donates some of its electron density into a conjugated pi system *via* mesomeric or inductive effects. This makes the pi system more nucleophilic. In terms of regioselectivity, some existing substituent groups on the aromatic ring promote further substitution at the *ortho-* or *para-*position(s) with respect to themselves. Other groups favor further substitution at the *meta-*position. Those groups are known to the person skilled in the art. Substituents exhibiting a +I or +M effect direct to the *ortho-* and/or *para*-position with respect to themselves. Substituents exhibiting a -I or -M effect direct to the *meta*-position. As known to the person skilled in the art, an M effect of a substituent is in principle more important than an I effect. This means that a +M effect can overrule a small -I effect.

According to the present invention, it was found that the compound of formula (I) does not necessarily need any other substituent than the carbonate group to conduct the process of the present invention. Thus, in formula (I) m can be 0 for both R¹ and R², i.e. there is no R¹ and no R² substituent at the respective aromatic rings. Also, in formula (1) m can be 0 for one of the substituents R¹ or R². However, it was found that an additional R¹ and/or R² substituent at the aromatic ring can be beneficial for the reaction, preferably with respect to selectivity and/or reactivity. Therefore, each m in formula (I) and (III), respectively, independently is 0 to 4, preferably 0 to 3, more preferably 0 or 1, more preferably 1 or 2, more preferably 2 or 3, most preferably 0, most preferably 1, most preferably 2, most preferably 3, most preferably 4. The person skilled in the art knows that steric effects need to be considered, too, because a bulky substituent at the aromatic ring might affect the reaction and thus the resulting product. Accordingly, by choosing the R¹ and/or R² substituent(s) of the aromatic rings, the person skilled in the art is able to tailor the structure of the resulting polycarbonate.

It was found that the process according to the present invention can be used to obtain a regular polymer backbone having a linking group (-CH₂R⁴CH₂-) between two linked aromatic moieties which is either in *ortho-, meta-* or *para-position* with respect to the carbonate group. According to the present invention, *ortho, meta* or *para* always refer to the position at the aromatic ring with respect to the mandatory carbonate group at the same ring, if not stated otherwise. The existing carbonate group has a small +M effect, directing an electrophile to the *para-position* with respect to the carbonate group. Without any additional R¹ and/or R² substituent at the aromatic rings (m = 0 for R¹ and R²), mainly a polymer having para-linkages is obtained. Nevertheless, also other linkages are observed. However, in a preferred embodiment of the invention it was found that by having at least one R¹ and/or R² substituent at the aromatic ring, the *para*-directing effect of the carbonate group can be overruled by the described at least one R¹ and/or R² substituent, leading to a selective reaction, wherein a regular polymer can be obtained which has an *ortho-* or *meta*-linkage with respect to the carbonate group. Especially, if at least one R¹ and/or R² substituent is present which has a *para*-directing effect (i.e. the at least one R¹ and/or R² substituent is capable of directing an electrophile to a position at the aromatic ring which is in *para-position* with respect to the at least one R¹ and/or R² substituent, respectively) and this at least one R¹ and/or R² substituent is in *ortho-position* with respect to the carbonate group substituting the same aromatic ring, a *meta*-linkage with respect to the carbonate group is obtained. Thus, a selective coupling takes place wherein a polycarbonate is obtained which comprises essentially *meta*-linkages. If, in turn, at least one *para*-directing R¹ and/or R² substituent is present which is in *meta*-position with respect to the carbonate group substituting the same aromatic ring, an *ortho*-linkage and *para*-linkage with respect to the carbonate group is obtained. It is to be noted that a *"para-*directing" R¹ and/or R² substituent is generally to be understood as *ortho-* and *para-* directing substituent (in contrast to substituent that solely directs to a *meta*-position)*.* The skilled person knows that a substituent may either be *ortho-*/*para-* directing or *meta*-directing. Transferred to the present case, the "*para*-directing" R¹ and/or R² substituent principally directs in *para-* and *ortho*-position. In case that such a "*para*-directing" R¹ and/or R² substituent (which is generally *ortho-* and *para*-directing) is present in *ortho*-position with respect to the carbonate group (substituting the same aromatic ring), sterical hindrance leads to a fully *para*-selective substitution (leading to *meta*-linkages with respect to the carbonate moiety). In this case no ortho-substitution is observed. However, in case that the "*para*-directing" R¹ and/or R² substituent (which is generally *para-* and *ortho*-directing) is present in *meta*-position with respect to the carbonate group (substituting the same aromatic ring), less sterical hindrance occurs and both *ortho-* and para-substitution can be observed (leading to *ortho-* and *para-*linkages with respect to the carbonate moiety). Examples for such "para-directing" substituents are alkoxy groups.

The at least one R¹ and/or R² substituent can also be positioned in *para*-position with respect to the carbonate group at the same aromatic ring. The person skilled in the art knows how the directing effect of the additional R¹ and/or R² substituent(s) and their position at the aromatic ring with respect to the carbonate group substituting the same aromatic ring can affect the resulting linkages in the polycarbonate. The effect of a selective reaction is even more pronounced if two or three R¹ and/or R² substituents are present in addition to the carbonate group which are capable due to their chemical nature to direct the electrophile to the very same carbon atom. The person skilled in the art knows how more substituents affect the resulting polycarbonate.

Additionally, the compound of formula (IIa) or (IIb) determines the structure of the linking group -CH₂R⁴CH₂- in formula (III). Accordingly, R⁴ can have a structure of formula (IVa) or (IVb), respectively, depending on the structure of the compound of formula (IIa) or (IIb) used in the reaction. The compound of formula (IIa) can be substituted by p = 0 to 4 R³ substituents, preferably each independently representing an alkyl or alkoxy group having 1 to 6 carbon atoms. In a further embodiment, each R³ substituent may be independently represented by a halogen atom (such as F, Cl, Br, I), a carbonyl group (e. g. with ketone or ester functionality), a trifluoromethyl group (-CF₃) or any other suitable functional group. According to the present invention, it was found that the compound of formula (IIa) does not need any substituent to conduct the process of the present invention. Thus, in formula (IIa) p can be 0, i.e. there is no R³ substituent. However, an R³ substituent at the aromatic ring can be beneficial for the process. Therefore, p in formula (IIa) and thus, in formula (IVa) is 0 to 4, preferably 0 to 3, more preferably 0 to 2, more preferably 0 or 1, more preferably 1 to 4, more preferably 1 to 3, more preferably 1 or 2, still more preferably 3, still more preferably 4, most preferably 0, most preferably 1, most preferably 2. The person skilled in the art knows that steric effects need to be considered, too, because a bulky substituent at the aromatic ring might influence the resulting product. Accordingly, by choosing the R³ substituent(s) of the compound of formula (IIa), the person skilled in the art is able to influence the structure of the resulting linking group in the repeating unit with the structure of formula (III) and therefore, the structure of the polycarbonate as a whole.

The reaction is even more complex, because the compound of formula (IIa) can have q = 1 to 4 benzenes and thus, be a benzene (when q = 1), a biphenyl (when q = 2), a terphenyl (when q = 3) or a quaterphenyl (when q = 4). If a compound of formula (IIb) is used instead of a compound of formula (IIa), the reaction is similarly complex because the compound of formula (IIb) comprises condensed benzenes and r can be 1 to 3. Consequently, the compound of formula (IIb) can be a naphthalene (when r = 1), an anthracene (when r = 2), or a tetracene (when r = 3). Accordingly, by choosing a proper compound of formula (IIa) or (IIb), the person skilled in the art is able to tailor the structure of the resulting linking group in the repeating unit with the structure of formula (II) and therefore, the structure of the polycarbonate as a whole.

"Alkyl" in the context of the invention, for example and if not mentioned differently, refers to a linear or branched hydrocarbon which is saturated and therefore, it comprises only single bonds between adjacent carbon atoms. Preferably, for steric reasons alkyl groups according to the present invention have 1 to 6 carbon atoms and thus, comprise methyl, ethyl, *n*-propyl, isopropyl, *n*-butyl, *sec*-butyl, *tert*-butyl, *n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl or 1-ethyl-2-methylpropyl. These structures can be limited in choice, in case the invention defines the carbon atoms of an alkyl group in a different manner.

"Alkoxy" in the context of the invention, for example and if not mentioned differently, refers to a linear or branched alkyl group singularly bonded to oxygen (-OR). Preferably, alkoxy groups according to the present invention have 1 to 6 carbon atoms and thus, comprise methoxy, ethoxy, *n*-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy. These structures can be limited in choice, in case the invention defines the carbon atoms of an alkoxy group in a different manner.

The above enumerations should be understood by way of example and not as a limitation.

A "halogen atom" in the context of the invention, if not mentioned differently, refers to fluorine (F), chlorine (Cl), bromine (Br), iodine (I). Preferably, a halogen atom is F, Cl, Br or I, more preferably it is Cl or Br, most preferably it is Cl.

Moreover, formula (III) recites "n" as number of repeating units. Preferably, n is 6 to 60, more preferably it is 10 to 55, even more preferably it is 20 to 50, still more preferably it is 25 to 45 and most preferably it is 30 to 40. Depending on the length of the yielded polycarbonate (so depending on the number n of repeating units), physical, chemical and mechanical properties of the polycarbonate may vary. Depending on the number of repeating units, microscopic and/or macroscopic structures of the polycarbonate may change as well. By the preferred number n of repeating units, an optimum balance between processability and mechanical properties of the yielded polycarbonate can be established. Consequently, the skilled person may choose the number of n to tailor dedicated properties of the polycarbonate.

According to the present invention, it was found that a Lewis acid is required for the reaction. The Lewis acid acts as a catalyst. The term "Lewis acid" is known to the person skilled in the art. For the reaction to work, the Lewis acid catalyst can be added in a stoichiometric or substoichiometric amount. Whether the Lewis acid catalyst can be used in a stoichiometric or substoichiometric amount depends on the Lewis acid used. For example, the use of 1 molar equivalent of the Lewis acid TiCl₄ experimentally worked well in a model Friedel-Crafts alkylation between diphenyl carbonate and 1,4-bis(chloromethyl)benzene. It is well known that carbonates are acid sensitive. Consequently, carrying out the process according to the invention with a stoichiometric amount of Lewis acid is not a straightforward approach, much more the inventors showed that despite the strong acid sensitivity of carbonates it was possible to carry out the process in presence of a Lewis acid in a stoichiometric amount. For the Lewis acid FeBr₃, in contrast, an amount of 0.1 molar equivalent, and thus a substoichiometric amount, was sufficient in this model reaction. The person skilled in the art will be able to find out the optimal amount for other Lewis acid catalysts.

Although the reaction described can be carried out without any R¹ and R² substituent (m = 0), in a preferred embodiment of the invention at least one R¹ substituent and/or at least one R² substituent is present, preferably with a +I and/or +M effect, being capable of directing an electrophile to a position at the aromatic ring which is in *ortho-* or *para*-position, preferably *para-position,* with respect to the at least one R¹ and/or R² substituent, respectively. Thus, in formula (I) m preferably is at least 1 for R¹ and/or R². The at least one R¹ and/or R² substituent typically increases the reactivity of the aromatic ring. This preferably means that the reactivity towards the electrophilic aromatic substitution is increased in comparison to a substrate that only comprises a carbonate group (and each m is 0). It has been found that the at least one R¹ and/or R² substituent typically overrules the *para*-directing effect of the carbonate group which exhibits a small +M effect only. As a result, a regular polymer can be found which has an *ortho-* or *meta*-linkage, depending on the position of the at least one R¹ and/or R² substituent at the aromatic ring. An example for R¹ and/or R² substituents which exhibit a +M effect and are able to direct an electrophile to a position at the aromatic ring which is in *ortho-* or *para-*position, preferably *para*-position, with respect to themselves are alkoxy groups. Since alkoxy groups exhibit a bigger +M effect than a carbonate group, they are able to overrule the *para-*directing effect of the carbonate group. Again, referring to the embodiment of m = 0, the compound with the structure of formula (1) is diphenyl carbonate.

Furthermore, it is preferred that at least one R¹ substituent and/or at least one R² substituent independently is in *ortho-, meta-* or *para-position* with respect to the carbonate group substituting the same aromatic ring. Preferably, at least one R¹ and at least one R² substituent are in *ortho-position.* The R¹ and/or R² substituent of this preferred embodiment can but do not have be identical with the at least one R¹ and/or at least one R² substituent being capable of directing an electrophile to a position at the aromatic ring which is in *ortho-* or *para-*position, preferably *para*-position, with respect to the at least one R¹ and/or R² substituent, respectively.

Moreover, preferably a process is provided, wherein each R¹ substituent and each R² substituent independently represents an alkyl group or an alkoxy group, more preferably an alkyl or alkoxy group having 1 to 6 carbon atoms. Alkyl groups exhibit a +I effect, alkoxy groups exhibit a +M effect. A substituent which has 1 to 6 carbon atoms is preferred for steric reasons. Thus, preferably each R¹ substituent and each R² substituent independently represents methyl, ethyl, *n*-propyl, isopropyl, *n*-butyl, *sec*-butyl, *tert-*butyl, *n-*pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n*-butoxy, *sec*-butoxy, *tert-*butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

Overall, the person skilled in the art knows how the choice of any compound of formula (I) affects the resulting polycarbonate comprising a repeating unit with a structure of formula (III). Thus, the skilled person is able to predict the influences of the structure of the compound of formula (I). Preferably, the compound of formula (I) is selected from diphenyl carbonate (m = 0), guaiacol carbonate, bis(3-methoxyphenyl) carbonate or bis(2-(*tert*-butyl)-4-methoxyphenyl) carbonate. For guaiacol carbonate, m is 1 for R¹ as well as for R² and both the R¹ and R² substituent are a methoxy group, each located in *ortho*-position with respect to the carbonate group substituting the same aromatic ring. For bis(3-methoxyphenyl) carbonate, m is 1 for R¹ as well as for R² and both the R¹ and R² substituent are a methoxy group, each located in *meta*-position with respect to the carbonate group substituting the same aromatic ring. For bis(2-(*tert*-butyl)-4-methoxyphenyl) carbonate, m is 2 for R¹ as well as for R², wherein one R¹ and one R² substituent are a methoxy group, each located in *para*-position with respect to the carbonate group substituting the same aromatic ring and one R¹ and one R² substituent are a *tert-*butyl group, each located in *ortho-position* with respect to the carbonate group substituting the same aromatic ring. All of these exemplary diaryl carbonates which are substituted with different R¹ and R² substituents exhibiting a +M effect (here: methoxy) or a +I effect (here: *tert*-butyl) were successfully coupled with a primary alkyl halide, in particular 1,4-bis(chloromethyl)benzene, in model reactions.

The yielded polycarbonate comprises a repeating unit with a structure of formula (III), wherein R⁴ preferably comprises a structure of formula (IVa). More preferably, the yielded polycarbonate comprises a repeating unit with a structure of formula (III), wherein R⁴ comprises a structure of formula (IVb). The person skilled in the art knows how the choice of any compound of formula (IIa) or (IIb) affects the resulting polycarbonate comprising a repeating unit with a structure of formula (III), wherein R⁴ comprises a structure of formula (IVa) or (IVb), respectively. Thus, he or she is able to predict the influences of the structure of the compound of formula (IIa) or (IIb).

Therefore, in a preferred embodiment of the present invention a process is provided, wherein the compound of formula (IIa) is a bis(chloromethyl)benzene, bis(chloromethyl)-biphenyl, bis(chloromethyl)-terphenyl or bis(chloromethyl)-quaterphenyl. Thus, both X in formula (IIa) preferably represent Cl due to easy availability of the compounds. More preferably, the compound of formula (IIa) is 1,3-bis(chloromethyl)benzene (also known as α,α'-dichloro-*m-*xylene), 1,4-bis(chloromethyl)benzene or 4,4'-bis(chloromethyl)-1,1'-biphenyl, still more preferably 1,3-bis(chloromethyl)benzene or 1,4-bis(chloromethyl)benzene. The named compounds, especially the more preferred, could successfully serve as a coupling partner for diaryl carbonates in model reactions. In these model reactions, reaction products with an alkene end group were observed as side products in addition to the desired reaction products. Very likely, these side products resulted from HCl elimination of the chloromethylated intermediate. However, most preferably the compound of formula (IIa) is 1,3-bis(chloromethyl)benzene, as using this compound could prevent the described side reaction and consequently, longer reaction products can be obtained.

In another preferred embodiment of the present invention, a process is provided, wherein the compound of formula (IIb) is a bis(chloromethyl)naphthalene, bis(chloromethyl)anthracene or bis(chloromethyl)tetracene. Thus, both X in formula (IIa) preferably represent Cl due to easy availability of the compounds. More preferably, the compound of formula (IIb) is 1,8-bis(chloromethyl)naphthalene. Also, this compound could successfully serve as a coupling partner for diaryl carbonates in model reactions.

Preferably, either a halogenated solvent or no solvent at all is used for the described reaction. This means that the reaction can be performed neat or in the presence of a halogenated solvent. In case a solvent is used for the reaction, it is preferably selected from dichloromethane or dichloroethane, more preferably, dichloromethane.

According to a preferred embodiment of present invention, the Lewis acid catalyst used for the reaction is selected from a group consisting of AlCl₃, TiCl₄ or FeBr₃. All of the named Lewis acids were capable in promoting coupling between the compound of formula (I) and the compound of formula (IIa) or (IIb). Among these, FeBr₃ is preferred based on price and practical reasons.

Furthermore, in a preferred embodiment of the present invention the Lewis acid catalyst used for the reaction is added in a substoichiometric amount with respect to the compound of formula (IIa) or (IIb), respectively. The use of a substoichiometric amount of the Lewis acid catalyst is preferred over the use of a stoichiometric amount as acids like the Lewis acid catalyst are able to degrade the carbonate group. Preferably, the Lewis acid catalyst used for the reaction is added in an amount of 0.05 to 0.50 molar equivalents, more preferably 0.10 to 0.20 molar equivalents, with respect to the compound of formula (IIa) or (IIb), respectively. The described amounts of Lewis acid catalyst were sufficient for a good yield of the desired polycarbonate, specifically in the case of FeBr₃. Therefore, the use of FeBr₃ in a substoichiometric amount is most preferred.

According to the present invention, the process comprises a reaction, wherein a compound of formula (I) is reacted with a compound of formula (IIa) or (IIb). The compound of formula (I) is a diaryl carbonate, the compound of formula (IIa) or (IIb) is a primary alkyl halide, preferably a primary alkyl chloride. Moreover, the compound of formula (I) is preferably added in an amount of 1.0 to 4.0 molar equivalents, preferably 1.0 molar equivalent, with respect to the compound of formula (IIa) or (IIb), respectively. It was found that having 1.0 to 4.0 equivalents, preferably 1.0 equivalent, of the compound of formula (I) with respect to the compound of formula (IIa) or (IIb), respectively, is beneficial for obtaining a good yield.

Preferably, the reaction is performed at temperatures below room temperature, more preferably below 10 °C and most preferably below 5 °C. This is preferably followed by temperatures above room temperature. The person skilled in the art is able to adapt the reaction temperature and the reaction time in order to optimize yields.

Additionally, it is preferred that the reaction is carried out under an inert atmosphere so that no oxygen or water can hamper the desired reaction and the yield of the desired polycarbonate. Water may even destroy the activity of the employed Lewis acid.

In another aspect of the present invention, polycarbonates obtainable by the process of the present invention are provided. Those polycarbonates exhibit improved properties, in particular with respect to mechanical and/or optical properties, heat resistance and/or weatherability.

The definitions/explanations given above in context of the described process can directly be transferred to the polycarbonate described before and after this passage. All mandatory or preferred/advantageous features described in relation to the process according to the invention may form mandatory or preferred/advantageous features of the polycarbonate according to the invention as well.

As mentioned before, the objects of the present invention are (at least partially) solved by a polycarbonate.

In particular, the invention relates to a polycarbonate comprising a repeating unit with a structure of formula (III) 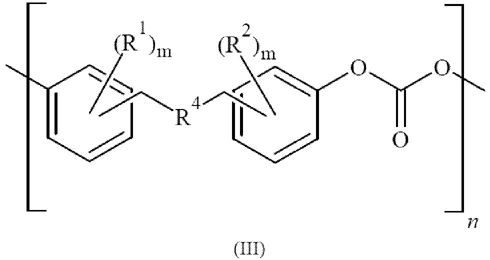 wherein the repeating unit with the structure of formula (III) comprises two aromatic rings, a carbonate group -OC(=O)O- and a linking group -CH₂R⁴CH₂-, wherein one of the two aromatic rings is substituted with the carbonate group, the two aromatic rings are linked *via* the linking group and R⁴ comprises a structure given in {} in formula (IVa) or (IVb), respectively, 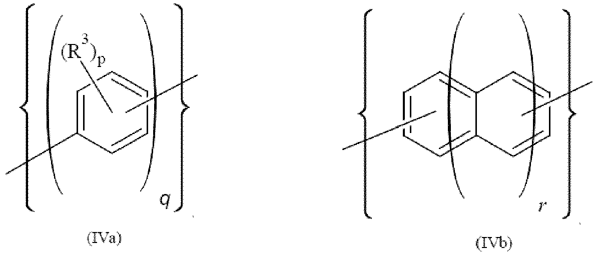 and wherein
- each R¹ and R² independently represents an R¹ substituent and an R² substituent, respectively, being capable of activating the aromatic ring which it substitutes by a mesomeric effect and/or an inductive effect,
- each m independently is 0 to 4, preferably 0 to 3,
- each R³ independently represents an R³ substituent, preferably independently representing an alkyl or alkoxy group having 1 to 6 carbon atoms,
- p is 0 to 4,
- q is 1 to 4,
- r is 1 to 3 and
- n is the number of repeating units, preferably 6 to 60.

With respect to the polycarbonate, preferably, the linking group in each repeating unit independently is either in *meta-* or *para*-position with respect to the carbonate group.

With respect to the polycarbonate, preferably, at least one R¹ substituent and/or at least one R² substituent independently is in *ortho-, meta-* or *para-position* with respect to the carbonate group substituting the same aromatic ring.

With respect to the polycarbonate, preferably, each R¹ substituent and each R² substituent independently represents an alkyl group or an alkoxy group, preferably an alkyl or alkoxy group having 1 to 6 carbon atoms, more preferably methyl, ethyl, *n*-propyl, isopropyl, *n*-butyl, *sec*-butyl, *tert*-butyl, *n*-pentyl, 1-methylbutyl, 2-methylbutyl, 3-methylbutyl, neopentyl, 1-ethylpropyl, cyclohexyl, cyclopentyl, n-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, n-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n-*hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

A polycarbonate comprising the above features exhibits improved properties, in particular with respect to mechanical and/or optical properties, heat resistance and/or weatherability.

### Brief description of the figures

Figure 1. Nano-electrospray mass spectrum in DMSO of inventive example 6.
Figure 2. Nano-electrospray mass spectrum in DMSO of inventive example 8.
Figure 3. Nano-electrospray mass spectrum in DMSO of inventive example 9.

### Examples

The following examples are used to describe the invention. It is to be noted that sometimes reactions are studied that do not represent polymerizations, but rather study the coupling (linking) of one aromatic moiety with another aromatic moiety (*via* a linking group), wherein at least one of those moieties comprises a carbonate group. However, based on those examples, the person skilled in the art can easily conclude that and how a polymerization reaction as such can be performed. Also, certain examples (experiments) did not lead to successful reactions. These examples are indicated as "comparative example".

### Materials used in the examples

All solvents and commercially available reagents were used as received.
A) Commercially available chemicals

| Chemical | CAS-number | Supplier | Purity (GC) |
|---|---|---|---|
| Triethylamine (NEt₃) | 121-44-8 | Acros Organics | 99% |
| 2-Methoxyphenol | 90-05-1 | Acros Organics | 99% |
| 3-Methoxyphenol | 150-19-6 | Acros Organics | 97% |
| 4-Hydroxy-3-*tert*-butylanisole | 121-00-6 | TCI | >98% |
| 4-Dimethylaminopyridine (DMAP) | 1122-58-3 | Fluorochem | 99% |
| Methyl phenyl carbonate | 13509-27-8 | Fluorochem | 97% |
| Diphenyl carbonate | 102-09-0 | TCI | 99% |
| Guaiacol carbonate | 553-17-3 | TCI | >98% |
| α,α'-Dichloro-*m*-xylene (1,3-bis(chloromethyl)benzene) | 626-16-4 | TCI | >96% |
| α,α'-Dichloro-*p*-xylene (1,4-bis(chloromethyl)benzene) | 623-25-6 | Acros Organics | 98% |
| Methyl chloroformate | 79-22-1 | Acros | 99% |
| Triphosgene | 32315-10-9 | Fluorochem | 99% |
| Hydrochloric acid (HCl) | 7647-01-0 | Fisher Chemical | analytical grade (36%) |
| Sodium hydroxide (NaOH) | 1310-73-2 | Acros Organics | 98% |
| Magnesium sulfate (MgSO₄) | 22189-08-8 | Acros Organics | 99%, extra pure, dried |
| Celite | 68855-54-9 | Chem-Lab NV | not indicated |
| Sodium chloride (NaCl) | 7647-14-5 | Acros Organics | 99.5% |
| Silica (SiO₂) | 7631-86-9 | Macherey-Nagel | particle size 40-63 µm, pore diameter 60 Å |
| Deuterated chloroform (CDCl₃) | 865-49-6 | Eurisotop | 99.8% D |
| FeBr₃ | 10031-26-2 | Sigma-Aldrich | 98% |
| TiCl₄ | 7550-45-0 | Acros Organics | 99.9% |
| AlCl₃ | 7446-70-0 | Sigma-Aldrich | 99.98% trace metal analysis |
| Acetonitrile (ACN) | 75-05-8 | Fisher Chemical | 99.8%, analytical reagent grade |
| Dichloromethane (DCM) | 75-09-2 | Acros Organics | >99%, extra dry |
| Dichloromethane (DCM) | 75-09-2 | Fisher Chemical | 99.8%, analytical reagent grade |
| Dimethylsulfoxide (DMSO) | 67-68-5 | Fisher Chemical | 99.8%, analytical reagent grade |
| Ethyl acetate (EtOAc) | 141-78-6 | Fisher Chemical | 99.8%, analytical reagent grade |
| Heptane | 64742-49-0 | Fisher Chemical | extra pure, but distill prior to use |
| Methanol | 67-56-1 | Fisher Chemical | 99.8%, analytical reagent grade |
| *tert*-Butyl methyl ether (MTBE) | 1634-04-4 | Fisher Chemical | extra pure, SRL |

B) Non-commercial chemicals

### General procedure 1:

A round-bottomed flask equipped with a stir bar was charged with the substituted phenol (1.0 equiv), triethylamine (1.2 equiv) and dichloromethane (25 mL). The mixture was cooled to 0 °C in an ice-water bath. Subsequently, methyl chloroformate (1.2 equiv) was added dropwise over a period of 10 minutes. The mixture was stirred at room temperature for the indicated time. The precipitate was filtered off over a paper filter. The filtrate was extracted with HCl (1 M, 1 x 30 mL), NaOH (0.5 M, 30 mL) and with saturated aqueous NaCl solution (1 x 30 mL). The organic layer was dried over anhydrous MgSO₄, filtered and concentrated *in vacuo.* The product was purified as indicated.

### General procedure 2:

An oven-dried round-bottomed flask equipped with a stir bar was charged with the substituted phenol, triethylamine and dichloromethane (20 mL) under argon atmosphere. The mixture was cooled to 0 °C in an ice-water bath and stirred for 10 minutes. Subsequently, triphosgene dissolved in DCM (4 mL) was added dropwise over a period of 10 minutes. The mixture was stirred at room temperature for the indicated time. The filtrate was extracted with HCl (1 M, 1 x 30 mL), NaOH (0.5 M, 30 mL) and with saturated aqueous NaCl solution (1 x 30 mL). The water layer was extracted with DCM (2 x 30 mL). The combined organic layers were dried over anhydrous MgSO₄, filtered and concentrated *in vacuo.* The product was purified as indicated.

### 2-Methoxyphenyl methyl carbonate

General procedure 1 was applied using 2-methoxyphenol (1.241 g, 10.0 mmol), NEt₃ (1.7 mL, 12.0 mmol) and methyl chloroformate (980 µL, 9.6 mmol) for 2 h. The product was obtained in 80% (1.455 g) yield.

White solid, m.p.: 31-32 °C, ¹H NMR (400 MHz, CDCl₃): δ 7.28-7.24 (m, 1H), 7.19 (dd, *J* = 7.9, 1.6 Hz, 1H), 7.15 (dd, *J =* 8.3, 1.3 Hz, 1H), 6.97 (td, *J =* 7.7, 1.5 Hz, 1H), 3.81 (s, 3H), 3.79 (s, 3H) ppm. ¹³C NMR (101 MHz, CDCl₃): δ 153.3 (C), 150.9 (C), 139.5 (C), 127.3 (CH), 122.4 (CH), 120.6 (CH), 113.0 (CH), 55.8 (CH₃), 55.5 (CH₃) ppm. HRMS for C₉H₁₁O₄ [M+H]⁺ calcd. 183.0652, found 183.0653.

### 3-Methoxyphenyl methyl carbonate

General procedure 1 was applied using 3-methoxyphenol (880 µL, 8.0 mmol), NEt₃ (1.4 mL, 9.6 mmol), 4-dimethylaminopyridine (49 mg, 5 mol%) and methyl chloroformate (930 µL, 9.6 mmol). The mixture was stirred for 3 h. The product was obtained in 67% (970 mg) yield.

Yellow oil, ¹H NMR (400 MHz, CDCl₃): δ 7.28 (t, *J =* 8.2 Hz, 1H), 6.81-6.77 (m, 2H), 6.74 (t, *J* = 2.3 Hz, 1H), 3.90 (s, 3H), 3.80 (s, 3H) ppm. ¹³C NMR (101 MHz, CDCl₃): δ 160.7 (C), 154.3 (C), 152.2 (C), 130.0 (CH), 113.3 (CH), 112.1 (CH), 107.1 (CH), 55.6 (CH₃), 55.5 (CH₃) ppm. HRMS (ESI) for C₉H₁₁O₄ [M+H]⁺ calcd. 183.0652, found 183.0653.

### 2-(tert-Butyl)-4-methoxyphenyl methyl carbonate

General procedure 1 was applied using 4-hydroxy-3-*tert*-butylanisole (1.802 g, 10.0 mmol), NEt₃ (1.7 mL, 12.0 mmol) and methyl chloroformate (1.2 mL, 12.0 mmol). The mixture was stirred overnight. The product was purified by an automated flash chromatography system using a heptane/EtOAc gradient (from 100% heptane to 5% EtOAc in 40 min, 25 mL/min). The product was obtained in 47% (1.115 g) yield.

Colorless oil, ¹H NMR (400 MHz, CDCl₃): δ 7.01 (d, *J =* 8.8 Hz, 1H), 6.92 (d, *J =* 3.0 Hz, 1H), 6.74 (dd, *J =* 8.8, 3.0 Hz, 1H), 3.91 (s, 3H), 3.80 (s, 3H), 1.35 (s, 9H) ppm. ¹³C NMR (101 MHz, CDCl₃): δ 157.3 (C), 155.0 (C), 143.7 (C), 142.6 (C), 124.2 (CH), 113.9 (CH), 110.9 (CH), 55.7 (CH₃), 55.5 (CH₃), 34.8 (C), 30.2 (CH₃) ppm. HRMS (ESI) for C₁₃H₁₈O₄K [M+K]⁺ calcd. 277.0837, found 277.0828.

### Bis(3-methoxyphenyl) carbonate

General procedure 2 was applied using 3-methoxyphenol (1.3 mL, 12.0 mmol), NEt₃ (2.1 mL, 15.0 mmol) and triphosgene (593 mg, 2.0 mmol). The mixture was stirred for 5 h. The product was obtained in 83% (1.360 g) yield without further purification.

Yellow oil, ¹H NMR (400 MHz, CDCl₃): δ 7.32-7.28 (m, 2H), 6.89-6.81 (m, 6H), 3.81 (s, 6H) ppm. ¹³C NMR (101 MHz, CDCl₃): δ 160.7 (C), 152.1 (C), 152.0 (C), 130.1 (CH), 113.2 (CH), 112.4 (CH), 107.1 (CH), 55.7 (CH₃) ppm. HRMS (ESI) for C₁₅H₁₄O₅K [M+K]⁺ calcd. 313.0473, found 313.0473.

### Bis(2-(tert-butyl)-4-methoxyphenyl) carbonate

General procedure 2 was applied using 4-hydroxy-3-*tert*-butylanisole (1.802 g, 10.0 mmol), NEt₃ (1.6 mL, 11.7 mmol) and triphosgene (593 mg, 2.0 mmol). The mixture was stirred overnight. The product was purified by an automated flash chromatography system using a heptane/EtOAc gradient (from 100% heptane to 30% EtOAc in 35 min, 25 mL/min) and obtained in 57% (1.097 g) yield.

White solid, m.p.: 123-125 °C, ¹H NMR (400 MHz, CDCl₃): δ 7.10 (d, *J =* 8.8 Hz, 2H), 6.96 (d, *J* = 2.9 Hz, 2H), 6.76 (d, *J =* 8.8, 2.9 Hz, 2H), 3.81 (s, 6H), 1.45 (s, 18H) ppm. ¹³C NMR (101 MHz, CDCl₃): δ 157.3 (C), 153.2 (C), 143.7 (C), 142.5 (C), 124.1 (CH), 113.9 (CH), 110.9 (CH), 55.6 (CH₃), 34.9 (C), 30.3 (CH₃) ppm. HRMS (ESI) for C₂₃H₃₀O₅K [M+K]⁺ calcd. 425.1725, found 425.1721.

### General considerations and methods

Nuclear magnetic resonance (NMR) spectra were recorded on a Bruker Avance III 400 (101 MHz for ¹³C) Fourier Transform NMR spectrometer at 300 K (unless stated otherwise) using the non- or partly deuterated solvent as internal standard (¹H: δ = 7.26 ppm, ¹³C: δ = 77.16 ppm for CDCl₃). Chemical shifts (δ) are given in ppm and coupling constants (*J*) are reported in Hertz (Hz). Multiplicities are described as s (singlet), d (doublet), t (triplet), q (quartet), br s (broad singlet) and m (multiplet) or combinations thereof.

High resolution mass spectrometry (HRMS) samples were prepared by dissolving 0.1-5 mg of the compound in CH₃CN/H₂O and further dilution to a concentration of 10⁻⁵-10⁻⁶ M. Formic acid (0.1%) was added prior to injection. 10 µL of each sample was injected using the CapLC system (Waters, Manchester, UK) and electrosprayed using a standard electrospray source. Samples were injected with an interval of three minutes. Positive ion mode accurate mass spectra were acquired using a Q-TOF II instrument (Waters, Manchester, UK). The MS was calibrated prior to use with a 0.1% H₃PO₄ solution. The spectra were lock mass corrected using the known mass of the nearest H₃PO₄ cluster or a known background ion. Analytes were detected as protonated, sodium or as potassium adduct. All measured masses are within a difference of 5 ppm compared to the calculated mass unless specified otherwise.

Nano-electrospray mass analysis samples were prepared by dissolving 4 mg of the obtained solid in 1 mL of DMSO. This mixture was diluted by taking 10 µL and dissolving it in 990 µL DMSO and taking 100 µL from this solution and adding 900 µL of DMSO. The measurement was done by placing 3 µL of the obtained sample in a in a gold-coated borosilicate needle (in-house made). The sample was then sprayed from this needle using a nano-electrospray source (Waters). Positive ion mode accurate mass spectra were acquired using a Q-TOF II instrument (Waters, Manchester, UK).

Flash chromatography was performed either manually on SiO₂ (particle size 40-63 µm, pore diameter 60 Å) using the indicated eluent and visualized by UV detection (254 nm) or on an automated chromatography system (Biotage^{®} One Isolera Automatic Flash) with on-line UV detection using Grace^{®} Silica flash Cartridges.

Thin layer chromatography (TLC) was performed using TLC plates from Merck (SiO₂, Kieselgel 60 F254 neutral, on aluminium with fluorescence indicator) and compounds were visualized by UV detection (254 nm) unless mentioned otherwise.

Melting points were recorded on a Büchi M-565 melting point apparatus and are uncorrected.

Size exclusion chromatography was performed using a PSS SECcurity System; polycarbonate calibration (according to 2301-0257502-09D method of company Currenta GmbH & Co. OHG, Leverkusen), dichloromethane as eluent, column 1 (PL-PC5) with a concentration of 2 g/L, a flow rate of 1.0 mL/min, at a temperature of 30 °C using UV and/or RI detection.

### Reaction optimization

### Screening of Lewis acids

### Synthetic procedure:

An oven-dried pressure vial of 10 mL equipped with a stir bar was charged with a Lewis acid as indicated in Table 1 under inert atmosphere. Subsequently, diphenyl carbonate (1.0 mmol, 1.0 equiv) dissolved in dichloromethane (1 mL, dry) was added. The vial was cooled to 0 °C, before α,α'-dichloro-*p*-xylene dissolved in dichloromethane (1 mL, dry) was added dropwise over 15 minutes at this temperature. The resulting mixture was stirred for 2 h at 0 °C, and subsequently for 2 h at 30 °C, before it was quenched by the addition of methanol (10 mL). The formed precipitate was filtered off over a paper filter and dried *in vacuo.* In case no precipitate was formed (example 5), MeOH was evaporated and the crude product was partitioned between H₂O (20 mL) and EtOAc (20 mL). The layers were separated and the organic layer was dried over anhydrous MgSO₄, filtered and concentrated *in vacuo.* A known amount of ethylene carbonate was added as internal standard and everything dissolved in CDCl₃ in order to determine the amount of recovered diphenyl carbonate (DPC).

**Table 1.**

| Example | Type | Lewis acid | Loading (equiv) | Recovery diphenyl carbonate (%) | Remark | Mₙ (g/mol) | M_{w} (g/mol) |
|---|---|---|---|---|---|---|---|
| 1 | Inventive | FeBr₃ | 1.0 | 0 | Precipitate formed during reaction | n.d.^{[a]} | n.d.^{[a]} |
| 2 | Inventive | FeBr₃ | 0.1 | 0 | Solution, solid formed upon workup | 1917 | 60458 |
| 3 | Inventive | AlCl₃ | 1.0 | 0 | Precipitate formed during reaction | n.d^{[a]} | n.d^{[a]} |
| 4 | Inventive | TiCl₄ | 1.0 | 0 | Solution, solid formed upon workup | 1411^{[a]} | 2467^{[a]} |
| 5 | Comparative | / | / | 100 | / | / | / |

| | | | | | | | |
|---|---|---|---|---|---|---|---|
| ^{[a]} Sample does not dissolve completely in DCM, filtering of the solution was required. N.d. = not possible to determine via GPC as the sample did not dissolve. | | | | | | | |

Conclusion: The reaction of diphenyl carbonate with α,α'-dichloro-*p*-xylene was studied as a model oligomerization and FeBr₃, AlCl₃ and TiCl₄ were evaluated as a Lewis acid in stoichiometric amount (examples 1, 3 and 4). Pleasingly, no activation of the aromatic moiety of the carbonate was required and a range of oligocarbonates was obtained. With FeBr₃ and AlCl₃ a precipitate was already formed during the reaction, which is probably due to a very high molecular weight of the formed oligomer. In both cases no diphenyl carbonate was recovered, but unfortunately we were unable to analyze these samples with GPC due to solubility issues. To our surprise, a catalytic amount of FeBr₃ was sufficient to promote the Friedel-Crafts alkylation between diphenyl carbonate and α,α'-dichloro-*p*-xylene delivering a range of oligomers with a number average molecular weight of Mₙ = 1917 g/mol and a weight average molecular weight of M_{w} = 306100 g/mol (example 2). The Lewis acid is crucial for the transformation as a comparative control reaction in the absence of a Lewis acid revealed full recovery of diphenyl carbonate (example 5).

### Evaluation of the carbonate scope

### A) Unsymmetrical methyl carbonates

### General procedure 3:

An oven-dried pressure vial of 10 mL equipped with a stir bar was charged with FeBr₃ under inert atmosphere. Subsequently, the carbonate dissolved in dichloromethane (1 mL, dry) was added. The vial was cooled to 0 °C, before the dihalo derivative dissolved in dichloromethane (1 mL, dry) was added dropwise at this temperature. The resulting mixture was then stirred for 2 h at 0 °C and subsequently for the indicated time at 30 °C, before it was quenched by the addition of MeOH (10 mL). The precipitation was filtered off over a paper filter and dried *in vacuo.*

### REFERENCE EXAMPLE 6 - Oligomerization of α,α'-dichloro-p-xylene with 2-methoxy-phenyl methyl carbonate

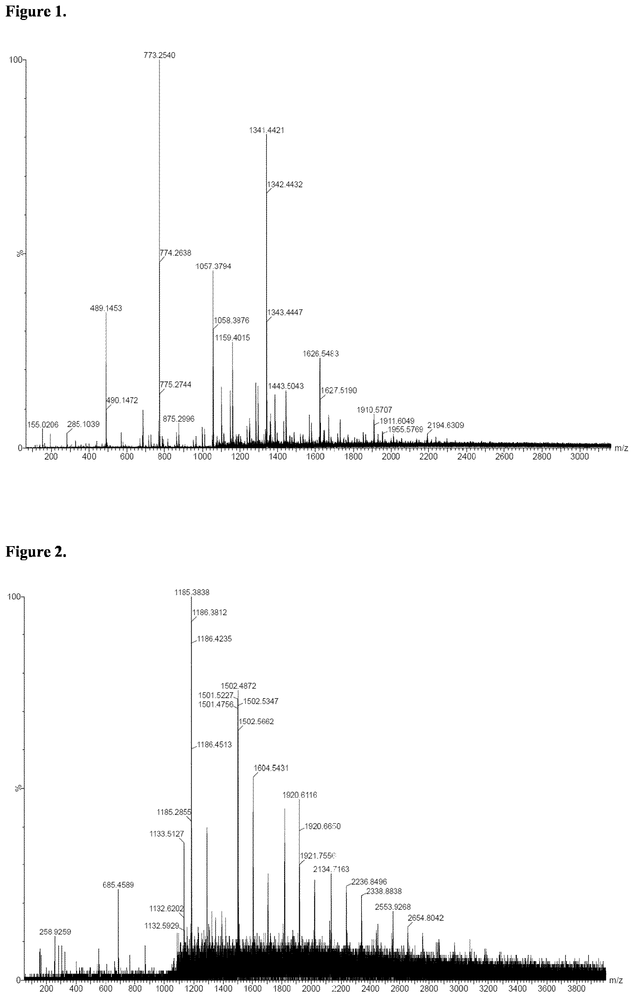

The general procedure 3 was applied using 2-methoxyphenyl methyl carbonate (182 mg, 1.0 mmol), α,α'-dichloro-*p*-xylene (88 mg, 0.5 mmol) and FeBr₃ (30 mg, 0.1 mmol). The mixture was stirred for 17 h at 30 °C. A solid was obtained, where besides the desired biscarbonate also longer oligomers were observed *via* nano-mass electrospray analysis as a result of *ortho-* and *para*-coupling of 2-methoxyphenyl methyl carbonate (see Figure 1). The repeating unit (n) had a m/z value of 284.1, with analytes detected as sodium adduct from 489.1 (n = 1, biscarbonate) until 2194.6 (n = 7).

### REFERENCE EXAMPLE 7 - Oligomerization of α,α'-dichloro-p-xylene with methyl phenyl carbonate

The general procedure 3 was applied using methyl phenyl carbonate (304 mg, 2.0 mmol), α,α'-dichloro-p-xylene (175 mg, 1.0 mmol) and FeBr₃ (59 mg, 0.2 mmol). The mixture was stirred for 17 h at 30 °C. A solid was obtained, where besides the desired biscarbonate also longer oligomers were observed *via* nano-mass electrospray analysis as a result of *ortho-* and *para-*coupling of methyl phenyl carbonate. The repeating unit (n) had a m/z value of 254.1, with analytes detected as sodium adduct from 429.1 (n = 1, biscarbonate) until 1445.4 (n = 5).

Conclusion: Two unsymmetrical methyl carbonates (2-methoxyphenyl methyl carbonate and methyl phenyl carbonate) were examined as coupling partner for α,α'-dichloro-*p*-xylene according to the present invention. To our surprise, besides the desired biscarbonate also longer oligomers were observed as a result of both *ortho-* and *para*-coupling in both cases. Pleasingly, the existing carbonate group is already sufficient to direct the electrophile at the *ortho-* and *para-position* due to its inherent small +M effect.

### B) Symmetrical carbonates

### INVENTIVE EXAMPLE 8 - Oligomerization of α,α'-dichloro-p-xylene with diphenyl carbonate

The general procedure 3 was applied using diphenyl carbonate (214 mg, 1.0 mmol), α,α'-dichloro-p-xylene (175 mg, 1.0 mmol) and FeBr₃ (30 mg, 0.1 mmol). The mixture was stirred for 2 h at 30 °C. A white solid was obtained, where the formation of oligomers was proven *via* nano-mass electrospray analysis (see Figure 2). The repeating unit (n) had a m/z value of 316.1, with the desired analytes detected as sodium adduct from 553.2 (n = 1, biscarbonate) until 2449.8 (n = 7). In addition, sodium adducts of analytes with an alkene end group (as a result of HCl elimination) were also visible in the mass spectrum from 1287.5 (n = 3) until 2868.0 (n = 9). GPC analysis confirmed the formation of oligomers with a number average molecular weight of Mₙ = 1917 g/mol and a weight average molecular weight of M_{w} = 60458 g/mol.

### INVENTIVE EXAMPLE 9 - Oligomerization of α,α'-dichloro-m-xylene with diphenyl carbonate

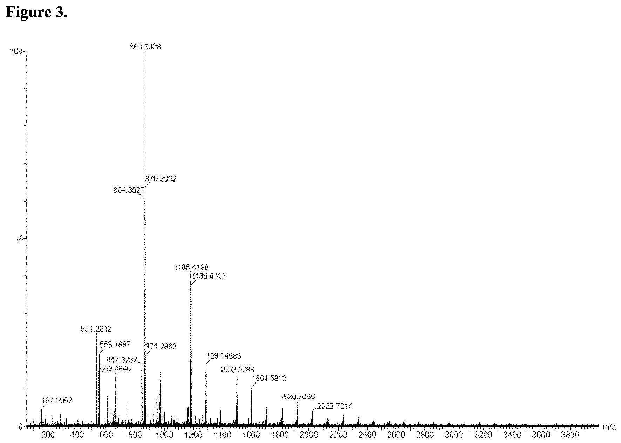

The general procedure 3 was applied using diphenyl carbonate (214 mg, 1.0 mmol), α,α'-dichloro-*m*-xylene (175 mg, 1.0 mmol) and FeBr₃ (30 mg, 0.1 mmol). The mixture was stirred for 2 h at 30 °C. A white solid was obtained, where the formation of oligomers was proven *via* nano-mass electrospray analysis (see Figure 3). The repeating unit (n) had a m/z value of 316.1, with the desired analytes detected as sodium adduct from 553.2 (n = 1, biscarbonate) until 2133.7 (n = 6). In addition, small peaks of the sodium adducts from the ring-closed oligomers were also visible in the mass spectrum from 971.3 (n = 3) until 2235.8 (n = 7). Interestingly, no sodium adducts of the analytes with an alkene end group (as a result of HCl elimination) were observed. GPC analysis confirmed the formation of oligomers with a number average molecular weight of Mₙ = 5787 g/mol and a weight average molecular weight of M_{w} = 306100 g/mol.

### INVENTIVE EXAMPLE 10 - Oligomerization of α,α'-dichloro-p-xylene with guaiacol carbonate

The general procedure 3 was applied using guaiacol carbonate (137 mg, 0.5 mmol), α,α'-dichloro-*p*-xylene (96 mg, 0.5 mmol) and FeBr₃ (15 mg, 0.05 mmol). The mixture was stirred for 2 h at 0 °C, followed by 2 h at 30 °C. A solid was obtained, where the formation of oligomers was proven *via* nano-mass electrospray analysis. The repeating unit (n) had a m/z value of 376.1, with analytes detected as sodium adduct from 673.2 (n = 1, biscarbonate) until 2178.6 (n = 5). In addition, sodium adducts of the analytes with an alkene end group (as a result of HCl elimination) were also visible in the mass spectrum from 775.3 (n = 1) until 2280.7 (n = 5). GPC analysis confirmed the formation of oligomers with a number average molecular weight of Mₙ = 465 g/mol and a weight average molecular weight of M_{w}= 844 g/mol.

### INVENTIVE EXAMPLE 11 - Oligomerization of α,α'-dichloro-p-xylene with bis(3-methoxyphenyl) carbonate

The general procedure 3 was applied using bis(3-methoxyphenyl) carbonate (137 mg, 0.5 mmol), α,α'-dichloro-*p*-xylene (88 mg, 0.5 mmol) and FeBr₃ (15 mg, 0.05 mmol). The mixture was stirred for 2 h at 0 °C, followed by 2 h at 30 °C. A white solid was obtained, where the formation of oligomers was proven *via* nano-mass electrospray analysis. The repeating unit (n) had a m/z value of 376.1, with analytes detected as sodium adduct from 674.2 (n = 1, biscarbonate) until 2930.0 (n = 7). In addition, sodium adducts of the analytes with an alkene end group (as a result of HCl elimination) were also visible in the mass spectrum from 1151.4 (n = 3) until 3032.1 (n = 8). GPC analysis confirmed the formation of oligomers with a number average molecular weight of Mₙ = 1481 g/mol and a weight average molecular weight of M_{w} = 2834 g/mol.

### INVENTIVE EXAMPLE 12 - Oligomerization of α,α'-dichloro-p-xylene with bis(2-(tert-butyl)-4-methoxyphenyl) carbonate

The general procedure 3 was applied using bis(2-(*tert*-butyl)-4-methoxyphenyl) carbonate (193 mg, 0.5 mmol), α,α'-dichloro-*p*-xylene (88 mg, 0.5 mmol) and FeBr₃ (15 mg, 0.05 mmol). The mixture was stirred for 2 h at 0 °C, followed by 2 h at 30 °C. A white solid was obtained, where the formation of oligomers was proven *via* nano-mass electrospray analysis. The repeating unit (n) had a m/z value of 488.2, with analytes detected as sodium adduct from 897.2 (n = 1, biscarbonate) until 2362.2 (n = 4). In addition, sodium adducts of the analytes with an alkene end group (as a result of HCl elimination) were also visible in the mass spectrum from 1101.6 (n = 2) until 2464.3 (n = 5). GPC analysis confirmed the formation of oligomers with a number average molecular weight of Mₙ = 1542 g/mol and a weight average molecular weight of M_{w} = 2384 g/mol.

Conclusion: According to the present invention several symmetrical aryl carbonates were successfully coupled with α,α'-dichloro-*p*-xylene, delivering a range of oligomers. Pleasingly, the existing carbonate group in diphenyl carbonate is sufficient to achieve the coupling with the provided electrophile, due to its inherent small +M effect (example 8). Additional substituents (with an inherent +M and/or +I effect) were also allowed at different positions of the aromatic ring as illustrated in inventive examples 10-12. Besides the desired oligomers, also oligomers with an alkene end group were observed as side compounds, with α,α'-dichloro-*p*-xylene as electrophile, as a result of HCl elimination of the chloromethylated intermediate. By altering the electrophile to α,α'-dichloro-*m*-xylene, this side reaction could be prevented. Consequently, longer oligomers were observed by GPC analysis (example 9).

## Claims

1. A process for preparing a polycarbonate using electrophilic aromatic substitution, comprising a reaction of a compound with a structure of formula (I) 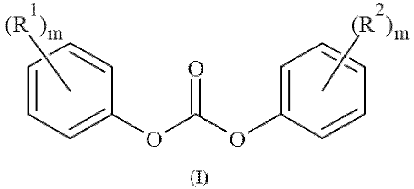 and a compound with a structure of formula (IIa) or (IIb) 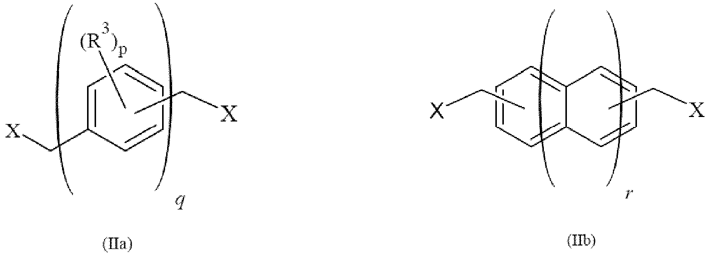 in the presence of a Lewis acid catalyst added in a stoichiometric or substoichiometric amount, yielding a polycarbonate comprising a repeating unit with a structure of formula (III) 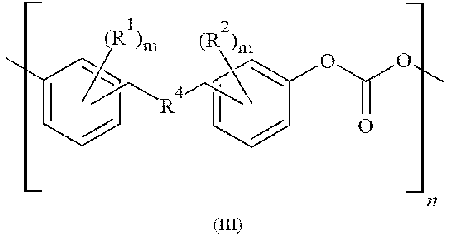 wherein the repeating unit with the structure of formula (III) comprises two aromatic rings, a carbonate group -OC(=O)O- and a linking group -CH₂R⁴CH₂-, wherein one of the two aromatic rings is substituted with the carbonate group, the two aromatic rings are linked *via* the linking group and R⁴ comprises a structure given in { } in formula (IVa) or (IVb), respectively, 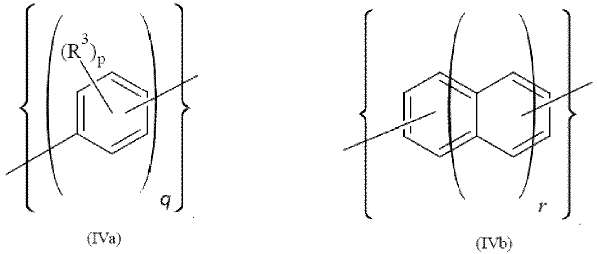 and wherein
- each R¹ and R² independently represents an R¹ substituent and an R² substituent, respectively, being capable of activating the aromatic ring which it substitutes by a mesomeric effect and/or an inductive effect,
- each m independently is 0 to 4, preferably 0 to 3,
- each X independently represents a halogen atom,
- each R³ independently represents an R³ substituent, preferably independently representing an alkyl or alkoxy group having 1 to 6 carbon atoms,
- p is 0 to 4,
- q is 1 to 4,
- r is 1 to 3 and
- n is the number of repeating units, preferably 6 to 60.

2. The process according to claim 1, wherein at least one R¹ substituent and/or at least one R² substituent represent a substituent being capable of directing an electrophile to a position at the aromatic ring which is in *ortho-* or *para-position,* preferably *para-*position, with respect to the at least one R¹ substituent and/or R² substituent, respectively.

3. The process according to one of claims 1 to 2, wherein at least one R¹ substituent and/or at least one R² substituent independently is in *ortho-, meta-* or *para-position* with respect to the carbonate group substituting the same aromatic ring.

4. The process according to one of claims 1 to 3, wherein each R¹ substituent and each R² substituent independently represents an alkyl group or an alkoxy group, preferably an alkyl or alkoxy group having 1 to 6 carbon atoms, more preferably methyl, ethyl, *n*-propyl, isopropyl, *n*-butyl, *sec*-butyl, *tert*-butyl, *n*-pentyl, 1-methylbutyl, 2-methylbutyl, 3-methylbutyl, neopentyl, 1-ethylpropyl, cyclohexyl, cyclopentyl, *n-*hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n*-butoxy, *sec*-butoxy, *tert-*butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

5. The process according to one of claims 1 to 4, wherein the compound of formula (IIa) is a bis(chloromethyl)benzene, bis(chloromethyl)-biphenyl, bis(chloromethyl)-terphenyl or bis(chloromethyl)-quaterphenyl, preferably 1,3-bis(chloromethyl)benzene, 1,4-bis(chloromethyl)benzene or 4,4'-bis(chloromethyl)-1,1'-biphenyl, more preferably 1,3-bis(chloromethyl)benzene or 1,4-bis(chloromethyl)benzene, most preferably 1,3-bis(chloromethyl)benzene.

6. The process according to one of claims 1 to 4, wherein the compound of formula (IIb) is a bis(chloromethyl)naphthalene, bis(chloromethyl)anthracene or bis(chloromethyl)tetracene, preferably 1,8-bis(chloromethyl)naphthalene.

7. The process according to one of claims 1 to 6, wherein either a halogenated solvent or no solvent at all is used, wherein in case a solvent is used, it is preferably selected from dichloromethane or dichloroethane, more preferably dichloromethane.

8. The process according to one of claims 1 to 7, wherein the Lewis acid catalyst is selected from a group consisting of AlCl₃, TiCl₄ or FeBr₃, preferably FeBr₃.

9. The process according to one of claims 1 to 8, wherein the Lewis acid catalyst is added in a substoichiometric amount, preferably in an amount of 0.05 to 0.50 equivalents, more preferably 0.10 to 0.20 equivalents, with respect to the compound of formula (IIa) or (IIb), respectively.

10. The process according to one of claims 1 to 9, wherein the compound of formula (I) is added in an amount of 1.0 to 4.0 equivalents, preferably 1.0 equivalent, with respect to the compound of formula (IIa) or (IIb), respectively.

11. A polycarbonate comprising a repeating unit with a structure of formula (III) 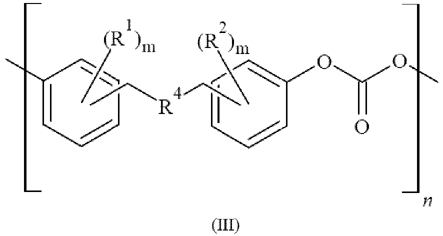 wherein the repeating unit with the structure of formula (III) comprises two aromatic rings, a carbonate group -OC(=O)O- and a linking group -CH₂R⁴CH₂-, wherein one of the two aromatic rings is substituted with the carbonate group, the two aromatic rings are linked *via* the linking group and R⁴ comprises a structure given in { } in formula (IVa) or (IVb), respectively, 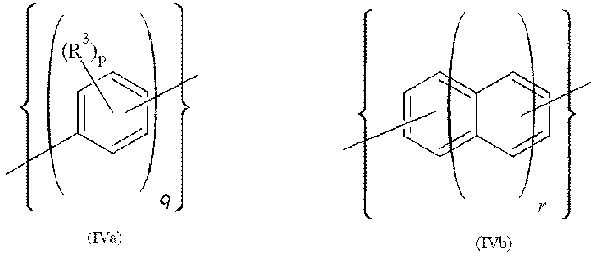 and wherein
- each R¹ and R² independently represents an R¹ substituent and an R² substituent, respectively, being capable of activating the aromatic ring which it substitutes by a mesomeric effect and/or an inductive effect,
- each m independently is 0 to 4, preferably 0 to 3,
- each R³ independently represents an R³ substituent, preferably independently representing an alkyl or alkoxy group having 1 to 6 carbon atoms,
- p is 0 to 4,
- q is 1 to 4,
- r is 1 to 3 and
- n is the number of repeating units, preferably 6 to 60.

12. The polycarbonate according to claim 11, wherein the linking group in each repeating unit independently is either in *meta-* or *para*-position with respect to the carbonate group.

13. The polycarbonate according to one of claims 11 to 12, wherein at least one R¹ substituent and/or at least one R² substituent independently is in *ortho-, meta-* or *para-*position with respect to the carbonate group substituting the same aromatic ring.

14. The polycarbonate according to one of claims 11 to 13, wherein each R¹ substituent and each R² substituent independently represents an alkyl group or an alkoxy group, preferably an alkyl or alkoxy group having 1 to 6 carbon atoms, more preferably methyl, ethyl, *n*-propyl, isopropyl, *n*-butyl, *sec*-butyl, *tert-*butyl*, n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n*-butoxy, *sec*-butoxy, *tert-*butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

15. The polycarbonate according to any one of claims 11 to 14, wherein n in formula (III) is 6 to 60.

## Patentansprüche

1. Verfahren zur Herstellung eines Polycarbonats mittels elektrophiler aromatischer Substitution, umfassend eine Umsetzung einer Verbindung mit einer Struktur der Formel (I) 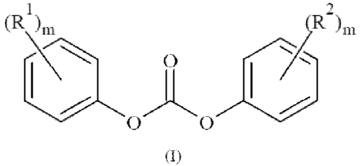 und einer Verbindung mit einer Struktur der Formel (II) 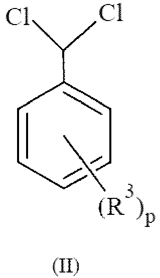
in Gegenwart eines Lewis-Säure-Katalysators, vorzugsweise eines Lewis-Säure-Katalysators auf Metall- oder Übergangsmetallbasis,
was ein Polycarbonat ergibt, das eine Wiederholungseinheit mit einer Struktur der Formel (III) umfasst 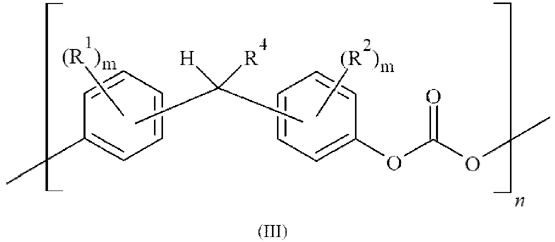
wobei die Wiederholungseinheit mit der Struktur der Formel (III) zwei aromatische Ringe, eine Carbonatgruppe -OC(=O)O- und eine Verknüpfungsgruppe -CHR⁴- umfasst, wobei einer der beiden aromatischen Ringe durch die Carbonatgruppe substituiert ist, die beiden aromatischen Ringe über die Verknüpfungsgruppe verknüpft sind und die Verknüpfungsgruppe in jeder Wiederholungseinheit unabhängig entweder in ortho-, meta- oder para-Position zur Carbonatgruppe steht,
und wobei
- m jeweils unabhängig 1 bis 4, vorzugsweise 1 bis 3, ist,
- R¹ und R² jeweils unabhängig für einen R¹-Substituenten bzw. einen R²-Substituenten stehen, der in der Lage ist, den aromatischen Ring, den er substituiert, durch einen mesomeren Effekt und/oder einen induktiven Effekt zu aktivieren, mit der Maßgabe, dass mindestens ein R¹-Substituent und zusätzlich mindestens ein R²-Substituent einen +M-Effekt oder einen +I-Effekt zeigen,
- p 0 bis 5, vorzugsweise 0 bis 3, weiter bevorzugt 0 oder 1, ist,
- R³ jeweils unabhängig für einen R³-Substituenten steht, der unabhängig für eine Alkylgruppe, eine Alkoxygruppe, ein Halogenatom, eine Trifluormethylgruppe, eine Carbonylgruppe mit Keton- oder Esterfunktionalität oder eine Nitrogruppe steht,
- R⁴ für eine Phenylgruppe steht, die gegebenenfalls ein- bis fünfmal, vorzugsweise ein- bis dreimal, weiter bevorzugt einmal, durch eine Alkylgruppe, eine Alkoxygruppe, ein Halogenatom, eine Trifluormethylgruppe, eine Carbonylgruppe mit Keton- oder Esterfunktionalität, eine Nitrogruppe oder eine Kombination davon substituiert ist, und
- n die Zahl der Wiederholungseinheiten, vorzugsweise 6 bis 60, ist,
und wobei in dem Fall, dass weder einer der m = 1 bis 4 R¹-Substituenten noch einer der m = 1 bis 4 R²-Substituenten einen +M-Effekt zeigt, nur ein R¹-Substituent oder ein R²-Substituent einen +I-Effekt zeigt.

2. Verfahren nach Anspruch 1, wobei jeder R¹-Substituent und jeder R²-Substituent unabhängig für eine Alkylgruppe oder eine Alkoxygruppe, vorzugsweise eine Alkyl- oder Alkoxygruppe mit 1 bis 6 Kohlenstoffatomen, weiter bevorzugt Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, steht.

3. Verfahren nach einem der Ansprüche 1 bis 2, wobei R⁴ für eine Phenylgruppe steht, die nicht substituiert oder ein- bis fünfmal, vorzugsweise ein- bis dreimal, weiter bevorzugt einmal, substituiert ist durch
- eine Alkylgruppe mit 1 bis 6 Kohlenstoffatomen, vorzugsweise Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl,
- eine Alkoxygruppe mit 1 bis 6 Kohlenstoffatomen, vorzugsweise Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy,
- F, Cl, Br oder I, vorzugsweise Cl oder Br,
- eine Trifluormethylgruppe, eine Carbonylgruppe mit Keton- oder Esterfunktionalität oder eine Nitrogruppe oder eine Kombination davon.

4. Verfahren nach einem der Ansprüche 1 bis 3, wobei die Verbindung mit der Struktur der Formel (I) eine Struktur der Formel (Ia) umfasst 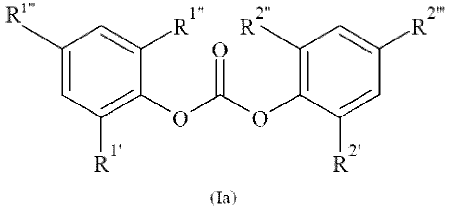 und die Umsetzung der Verbindung mit der Struktur der Formel (Ia) und der Verbindung mit der Struktur der Formel (II) ein Polycarbonat ergibt, das eine Wiederholungseinheit mit einer Struktur der Formel (IIIa) umfasst 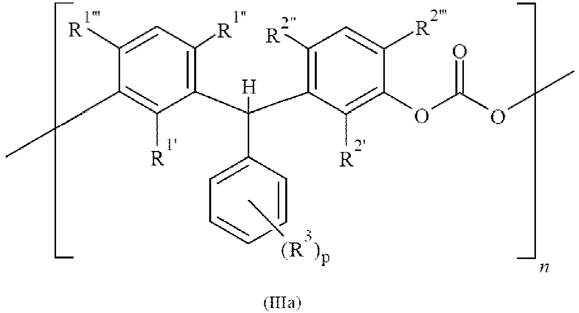 wobei
- R¹', R¹" und R¹‴ für die R¹-Substituenten in den Formeln (I) bzw. (III) stehen,
- R²', R²" und R²‴ für die R²-Substituenten in den Formeln (I) bzw. (III) stehen,
- p 0 bis 5, vorzugsweise 0 bis 3, weiter bevorzugt 0 oder 1, ist,
- R³ jeweils unabhängig für einen R³-Substituenten steht, der unabhängig für eine Alkylgruppe, eine Alkoxygruppe, ein Halogenatom, eine Trifluormethylgruppe, eine Carbonylgruppe mit Keton- oder Esterfunktionalität oder eine Nitrogruppe steht,
- n die Zahl der Wiederholungseinheiten, vorzugsweise 6 bis 60, ist,
- R¹', R¹", R²' und R²" unabhängig voneinander für ein Wasserstoffatom oder einen Substituenten, der einen +M-Effekt oder einen +I-Effekt zeigt, vorzugsweise eine Alkylgruppe oder eine alkoxygruppe, weiter bevorzugt eine Alkyl- oder Alkoxygruppe mit 1 bis 6 Kohlenstoffatomen, am meisten bevorzugt Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, stehen und
- R¹‴ und R²‴ unabhängig voneinander für einen Substituenten stehen, der einen +M-Effekt oder einen +I-Effekt zeigt, vorzugsweise eine Alkyl- oder Alkoxygruppe, weiter bevorzugt eine Alkyl- oder Alkoxygruppe mit 1 bis 6 Kohlenstoffatomen, am meisten bevorzugt Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, stehen.

5. Verfahren nach einem der Ansprüche 1 bis 4, wobei entweder ein halogeniertes Lösungsmittel und/oder ein aromatisches Lösungsmittel oder gar kein Lösungsmittel verwendet wird, wobei in dem Fall, dass ein Lösungsmittel verwendet wird, dieses vorzugsweise aus Dichlormethan, Dichlorethan oder Toluol, weiter bevorzugt Dichlormethan oder Dichlorethan, ausgewählt ist.

6. Verfahren nach einem der Ansprüche 1 bis 5, wobei der Lewis-Säure-Katalysator, vorzugsweise der Lewis-Säure-Katalysator auf Metall- oder Übergangsmetallbasis, ein Metall oder Übergangsmetall umfasst, das aus Al, Zn, Fe, Cu, Sc, Ti, Bi, Te, Nb, Sn oder In, vorzugsweise Fe, In, Zn oder Bi, ausgewählt ist.

7. Verfahren nach Anspruch 6, wobei der Lewis-Säure-Katalysator, vorzugsweise der Lewis-Säure-Katalysator auf Metall- oder Übergangsmetallbasis, aus AlCl₃, ZnCl₂, ZnBr₂, Zn(OTf)₂, FeBr₃, FeCl₃, Fe(OAc)₂, Cu(OTf)₂, Sc(OTf)₃, TiCl₄, BiCl₃, Bi(OTf)₃, TeCl₄, NbCl₅, SnCl₄, InCl₃ oder In(OTf)₃, vorzugsweise FeBr₃, FeCl₃ oder InCl₃, ausgewählt ist.

8. Verfahren nach einem der Ansprüche 1 bis 7, wobei der Lewis-Säure-Katalysator in stöchiometrischer oder unterstöchiometrischer Menge, vorzugsweise in einer Menge von 0,025 bis 2,2 Äquivalenten, weiter bevorzugt 0,025 bis 0,2 Äquivalenten, bezogen auf die Verbindung der Formel (I) bzw. (Ia), zugegeben wird.

9. Verfahren nach einem der Ansprüche 1 bis 8, wobei die Verbindung der Formel (II) in einer Menge von 0,5 bis 1,1 Äquivalenten, vorzugsweise 1,0 Äquivalenten, bezogen auf die Verbindung der Formel (I) bzw. (Ia), zugegeben wird.

10. Verfahren nach einem der Ansprüche 1 bis 9, wobei die Umsetzung bei einer Reaktionstemperatur von 30 bis 70 °C, vorzugsweise 30 bis 40 °C, durchgeführt wird.

11. Verfahren nach einem der Ansprüche 1 bis 10, wobei eine Lewis-Base, vorzugsweise Na₂CO₃, der Reaktionsmischung zugegeben wird, vorzugsweise in einer Menge von 2,0 bis 4,0 Äquivalenten, weiter bevorzugt 2,0 Äquivalenten, bezogen auf die Verbindung der Formel (I) bzw. (Ia).

12. Polycarbonat, umfassend eine Wiederholungseinheit mit einer Struktur der Formel (III) 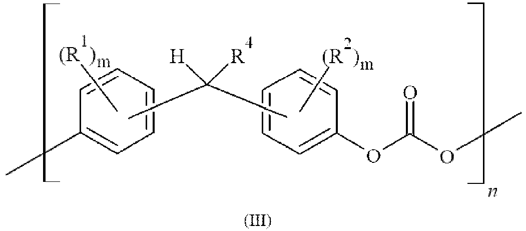 wobei
- die Wiederholungseinheit mit der Struktur der Formel (III) zwei aromatische Ringe, eine Carbonatgruppe - OC(=O)O- und eine Verknüpfungsgruppe -CHR⁴- umfasst, wobei einer der beiden aromatischen Ringe durch die Carbonatgruppe substituiert ist, die beiden aromatischen Ringe über die Verknüpfungsgruppe verknüpft sind und die Verknüpfungsgruppe in jeder Wiederholungseinheit unabhängig entweder in ortho-, meta- oder para-Position zur Carbonatgruppe steht,
- m jeweils unabhängig 1 bis 4, vorzugsweise 1 bis 3, ist,
- R¹ und R² jeweils unabhängig für einen R¹-Substituenten bzw. einen R²-Substituenten stehen, der in der Lage ist, den aromatischen Ring, den er substituiert, durch einen mesomeren Effekt und/oder einen induktiven Effekt zu aktivieren, mit der Maßgabe, dass mindestens ein R¹-Substituent und zusätzlich mindestens ein R²-Substituent einen +M-Effekt oder einen +I-Effekt zeigen,
- R⁴ für eine Phenylgruppe steht, die gegebenenfalls ein- bis fünfmal, vorzugsweise ein- bis dreimal, weiter bevorzugt einmal, durch eine Alkylgruppe, eine Alkoxygruppe, ein Halogenatom, eine Trifluormethylgruppe, eine Carbonylgruppe mit Keton- oder Esterfunktionalität, eine Nitrogruppe oder eine Kombination davon substituiert ist, und
- n die Zahl der Wiederholungseinheiten, vorzugsweise 6 bis 60, ist,
wobei in dem Fall, dass weder einer der m = 1 bis 4 R¹-Substituenten noch einer der m = 1 bis 4 R²-Substituenten einen +M-Effekt zeigt, nur ein R¹-Substituent oder ein R²-Substituent einen +I-Effekt zeigt.

13. Polycarbonat nach Anspruch 12, wobei jeder R¹-Substituent und R²-Substituent unabhängig für eine Alkylgruppe oder eine Alkoxygruppe, vorzugsweise eine Alkyl- oder Alkoxygruppe mit 1 bis 6 Kohlenstoffatomen, weiter bevorzugt Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, steht.

14. Polycarbonat nach einem der Ansprüche 12 bis 13, wobei R⁴ für eine Phenylgruppe steht, die nicht substituiert oder ein- bis fünfmal, vorzugsweise ein- bis dreimal, weiter bevorzugt einmal, substituiert ist durch
- eine Alkylgruppe mit 1 bis 6 Kohlenstoffatomen, vorzugsweise Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl,
- eine Alkoxygruppe mit 1 bis 6 Kohlenstoffatomen, weiter bevorzugt Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy,
- F, Cl, Br oder I, vorzugsweise Cl oder Br,
- eine Trifluormethylgruppe, eine Carbonylgruppe mit Keton- oder Esterfunktionalität oder eine Nitrogruppe oder eine Kombination davon.

15. Polycarbonat nach einem der Ansprüche 12 bis 14, umfassend eine Wiederholungseinheit mit einer Struktur der Formel (IIIa) 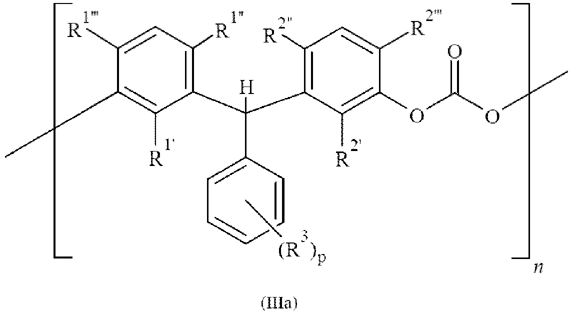 wobei
- R¹', R¹" und R¹‴ für die R¹-Substituenten in der Formel (III) stehen,
- R²', R²" und R²‴ für die R²-Substituenten in der Formel (III) stehen,
- R³ jeweils unabhängig für einen R³-Substituenten steht, der unabhängig für eine Alkylgruppe, eine Alkoxygruppe, ein Halogenatom, eine Trifluormethylgruppe, eine Carbonylgruppe mit Keton- oder Esterfunktionalität oder eine Nitrogruppe steht,
- p 0 bis 5, vorzugsweise 0 bis 3, weiter bevorzugt 0 oder 1, ist,
- n die Zahl der Wiederholungseinheiten, vorzugsweise 6 bis 60, ist,
- R¹', R¹", R²' und R²" unabhängig voneinander für ein Wasserstoffatom oder einen Substituenten, der einen +M-Effekt oder einen +I-Effekt zeigt, vorzugsweise eine Alkylgruppe oder eine Alkoxygruppe, weiter bevorzugt eine Alkyl- oder Alkoxygruppe mit 1 bis 6 Kohlenstoffatomen, am meisten bevorzugt Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, stehen und
- R¹‴ und R²‴ unabhängig voneinander für einen Substituenten stehen, der einen +M-Effekt oder einen +I-Effekt zeigt, vorzugsweise eine Alkyl- oder Alkoxygruppe, weiter bevorzugt eine Alkyl- oder Alkoxygruppe mit 1 bis 6 Kohlenstoffatomen, am meisten bevorzugt Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, stehen.

## Revendications

1. Procédé de préparation d'un polycarbonate utilisant une substitution aromatique électrophile, comprenant une réaction d'un composé ayant une structure de formule (I) 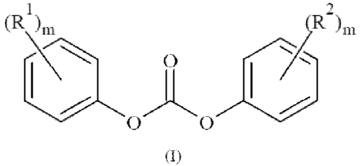 et d'un composé ayant une structure de formule (II) 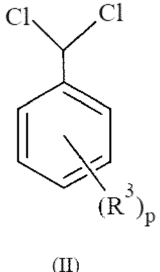
en présence d'un catalyseur de type acide de Lewis, de préférence un catalyseur de type acide de Lewis à base de métal ou de métal de transition,
produisant un polycarbonate comprenant un motif répétitif ayant une structure de formule (III) 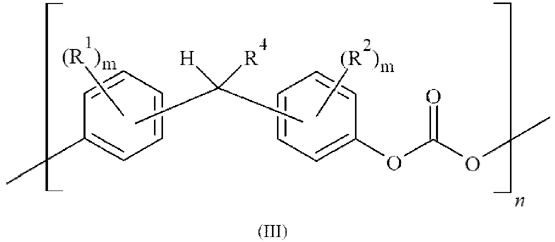
dans laquelle le motif répétitif ayant une structure de formule (III) comprend deux cycles aromatiques, un groupe carbonate -OC(=O)O- et un groupe de liaison -CHR⁴-, un des deux cycles aromatiques étant substitué par le groupe carbonate, les deux cycles aromatiques étant liés via le groupe de liaison et le groupe de liaison dans chaque motif répétitif est indépendamment soit en position ortho, méta ou para par rapport au groupe carbonate,
et dans laquelle,
- chaque m est indépendamment 1 à 4, de préférence 1 à 3,
- chaque R¹ et R² représente indépendamment respectivement un substituant R¹ et un substituant R², qui est capable d'activer le noyau aromatique qu'il substitue par un effet mésomère et/ou un effet inductif, sous réserve qu'au moins un substituant R¹ et en outre au moins un substituant R² présente un effet +M ou un effet +I,
- p est 0 à 5, de préférence 0 à 3, plus préférablement 0 ou 1,
- chaque R³ représente indépendamment un substituant R³ représentant indépendamment un groupe alkyle, un groupe alcoxy, un atome d'halogène, un groupe trifluorométhyle, un groupe carbonyle ayant une fonctionnalité cétone ou ester, ou un groupe nitro,
- R⁴ représente un groupe phényle éventuellement substitué une à cinq fois, de préférence une à trois fois, plus préférablement une fois, par un groupe alkyle, un groupe alcoxy, un atome d'halogène, un groupe trifluorométhyle, un groupe carbonyle ayant une fonctionnalité cétone ou ester, un groupe nitro, ou une combinaison correspondante et
- n est le nombre de motifs répétitifs, de préférence 6 à 60,
et dans laquelle, dans le cas où ni aucun des m = 1 à 4 substituants R¹ ni aucun des m = 1 à 4 substituants R² ne présentent un effet +M, un seul substituant R¹ ou un substituant R² présente un effet +1.

2. Procédé selon la revendication 1, dans lequel chaque substituant R¹ et chaque substituant R² représentent indépendamment un groupe alkyle ou un groupe alcoxy, de préférence un groupe alkyle ou alcoxy ayant 1 à 6 atomes de carbone, plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy.

3. Procédé selon l'une des revendications 1 à 2, dans lequel R⁴ représente un groupe phényle qui n'est pas substitué ou substitué une à cinq fois, de préférence une à trois fois, plus préférablement une fois, par
- un groupe alkyle ayant 1 à 6 atomes de carbone, de préférence méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle ou 1-éthyl-2-méthylpropyle,
- un groupe alcoxy ayant 1 à 6 atomes de carbone, de préférence méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy,
- F, Cl, Br ou I, de préférence Cl ou Br,
- un groupe trifluorométhyle, un groupe carbonyle ayant une fonctionnalité cétone ou ester, ou un groupe nitro
ou une combinaison correspondante.

4. Procédé selon l'une des revendications 1 à 3, dans lequel le composé ayant la structure de formule (I) comprend une structure de formule (Ia) 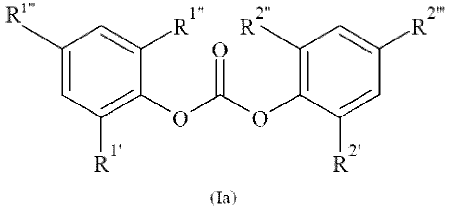 et la réaction du composé ayant la structure de formule (Ia) et du composé ayant la structure de formule (II) produit un polycarbonate comprenant un motif répétitif ayant une structure de formule (IIIa) 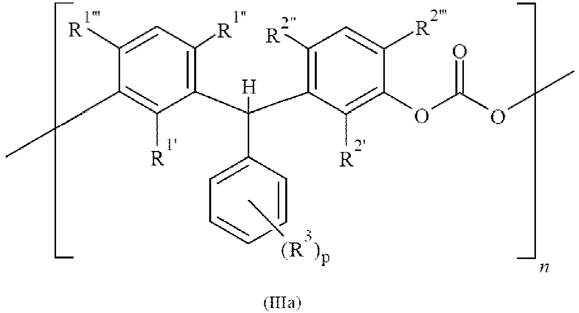 dans laquelle
- R^{1'}, R^{1"} et R^{1‴} représentent respectivement les substituants R¹ dans les formules (I) et (III),
- R^{2'}, R^{2"} et R^{2‴} représentent respectivement les substituants R² dans les formules (I) et (III),
- p est 0 à 5, de préférence 0 à 3, plus préférablement 0 ou 1,
- chaque R³ représente indépendamment un substituant R³ représentant indépendamment un groupe alkyle, un groupe alcoxy, un atome d'halogène, un groupe trifluorométhyle, un groupe carbonyle ayant une fonctionnalité cétone ou ester ou un groupe nitro,
- n est le nombre de motifs répétitifs, de préférence 6 à 60,
- R^{1'}, R^{1"}, R^{2'} et R^{2"} représentent indépendamment un atome d'hydrogène ou un substitut qui présente un effet +M ou un effet +I, de préférence un groupe alkyle ou un groupe alcoxy, plus préférablement un groupe alkyle ou alcoxy avant 1 à 6 atomes de carbone, le plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy, et
- R^{1‴} et R^{2‴} représentent indépendamment un substituant qui présente un effet +M ou un effet +I, préférablement un groupe alkyle ou un groupe alcoxy, plus préférablement un groupe alkyle ou alcoxy ayant 1 à 6 atomes de carbone, le plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy.

5. Procédé selon l'une des revendications 1 à 4, dans lequel soit un solvant halogéné et/ou un solvant aromatique sont utilisés, soit aucun solvant du tout n'est utilisé, dans lequel dans le cas où un solvant est utilisé, il est de préférence choisi parmi le dichlorométhane, un dichloroéthane ou le toluène, plus préférablement le dichlorométhane ou un dichloroéthane.

6. Procédé selon l'une des revendications 1 à 5, dans lequel le catalyseur de type acide de Lewis, de préférence le catalyseur de type acide de Lewis à base de métal ou de métal de transition comprend un métal ou un métal de transition choisi parmi Al, Zn, Fe, Cu, Sc, Ti, Bi, Te, Nb, Sn ou In, de préférence Fe, In, Zn ou Bi.

7. Procédé selon la revendication 6, dans lequel le catalyseur de type acide de Lewis, de préférence le catalyseur de type acide de Lewis à base de métal ou de métal de transition est choisi parmi AlCl₃, ZnCl₂, ZnBr₂, Zn(OTf)₂, FeBr₃, FeCl₃, Fe(OAc)₂, Cu(OTf)₂, Sc(OTf)₃, TiCl₄, BiCl₃, Bi(OTf)₃, TeCl₄, NbCl₅, SnCl₄, InCl₃ ou In(OTf)₃, de préférence FeBr₃, FeCl₃ ou InCl₃.

8. Procédé selon l'une des revendications 1 à 7, dans lequel le catalyseur de type acide de Lewis est ajouté en une quantité stœchiométrique ou sous-stœchiométrique, de préférence en une quantité de 0,025 à 2,2 équivalents, plus préférablement de 0,025 à 0,2 équivalents, par rapport au composé de formule (I) ou (Ia), respectivement.

9. Procédé selon l'une des revendications 1 à 8, dans lequel le composé de formule (II) est ajouté en une quantité de 0,5 à 1,1 équivalent, de préférence 1,0 équivalent, par rapport au composé de formule (I) ou (Ia), respectivement.

10. Procédé selon l'une des revendications 1 à 9, dans lequel la réaction est effectuée à une température de 30 à 70 °C, préférablement de 30 à 40 °C.

11. Procédé selon l'une des revendications 1 à 10, dans lequel une base de Lewis, de préférence Na₂CO₃, est ajoutée au mélange réactionnel, de préférence en une quantité de 2,0 à 4,0 équivalents, plus préférablement 2,0 équivalents, par rapport au composé de formule (I) ou (Ia), respectivement.

12. Polycarbonate comprenant un motif répétitif ayant une structure de formule (III) 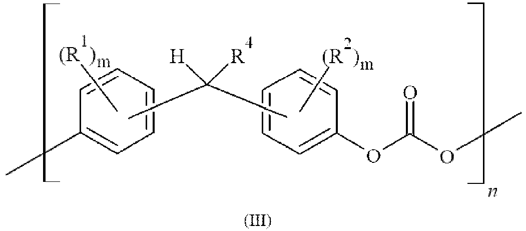 dans laquelle
- le motif répétitif ayant la structure de formule (III) comprend deux cycles aromatiques, un groupe carbonate -OC(=O)O- et un groupe de liaison -CHR⁴-, dans laquelle l'un des deux cycles aromatiques est substitué par le groupe carbonate, les deux cycles aromatiques sont reliés via le groupe de liaison et le groupe de liaison dans chaque motif répétitif est indépendamment soit en position ortho, soit méta, soit para par rapport au groupe carbonate,
- chaque m est indépendamment 1 à 4, de préférence 1 à 3,
- chaque R¹ et R² représente indépendamment respectivement un substituant R¹ et un substituant R², qui est capable d'activer le noyau aromatique qu'il substitue par un effet mésomère et/ou un effet inductif, sous réserve qu'au moins un substituant R¹ et en outre au moins un substituant R² présente un effet +M ou un effet +I,
- R⁴ représente un groupe phényle éventuellement substitué une à cinq fois, de préférence une à trois fois, plus préférablement une fois, par un groupe alkyle, un groupe alcoxy, un atome d'halogène, un groupe trifluorométhyle, un groupe carbonyle ayant une fonctionnalité cétone ou ester, un groupe nitro, ou une combinaison correspondante et
- n est le nombre de motifs répétitifs, de préférence 6 à 60,
dans lequel dans le cas où ni l'un quelconque parmi les m = 1 à 4 substituants R¹, ni aucun parmi les m = 1 à 4 substituants R² ne présentent un effet +M, seulement un substituant R¹ ou un substituant R² présente un effet +I.

13. Polycarbonate selon la revendication 12, dans lequel chaque substituant R¹ et chaque substituant R² représentent indépendamment un groupe alkyle ou un groupe alcoxy, de préférence un groupe alkyle ou alcoxy ayant 1 à 6 atomes de carbone, plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy.

14. Polycarbonate selon l'une des revendications 12 à 13, dans lequel R⁴ représente un groupe phényle qui n'est pas substitué ou substitué une à cinq fois, de préférence une à trois fois, plus préférablement une fois, par
- un groupe alkyle ayant 1 à 6 atomes de carbone, de préférence méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle ou 1-éthyl-2-méthylpropyle,
- un groupe alcoxy ayant 1 à 6 atomes de carbone, plus préférablement méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy,
- F, Cl, Br ou I, de préférence Cl ou Br,
- un groupe trifluorométhyle, un groupe carbonyle ayant une fonctionnalité cétone ou ester, ou un groupe nitro
ou une combinaison correspondante.

15. Polycarbonate selon l'une des revendications 12 à 14, comprenant un motif répétitif ayant une structure de formule (IIIa) 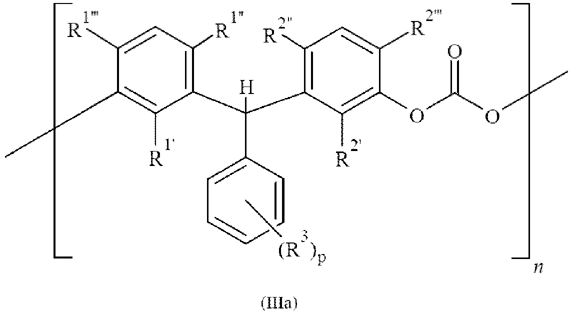 dans laquelle
- R^{1'}, R^{1"} et R^{1‴} représentent les substituants R¹ dans la formule (III),
- R^{2'}, R^{2"} et R^{2‴} représentent les substituants R² dans la formule (III),
- chaque R³ représente indépendamment un substituant R³ représentant indépendamment un groupe alkyle, un groupe alcoxy, un atome d'halogène, un groupe trifluorométhyle, un groupe carbonyle ayant une fonctionnalité cétone ou ester, ou un groupe nitro,
- p est 0 à 5, de préférence 0 à 3, plus préférablement 0 ou 1,
- n est le nombre de motifs répétitifs, de préférence 6 à 60,
- R^{1'}, R^{1"}, R^{2'} et R^{2"} représentent indépendamment un atome d'hydrogène ou un substitut qui présente un effet +M ou un effet +I, de préférence un groupe alkyle ou un groupe alcoxy, plus préférablement un groupe alkyle ou alcoxy ayant 1 à 6 atomes de carbone, le plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy, et
- R^{1‴} et R^{2‴} représentent indépendamment un substituant qui présente un effet +M ou un effet +I, préférablement un groupe alkyle ou un groupe alcoxy, plus préférablement un groupe alkyle ou alcoxy ayant 1 à 6 atomes de carbone, le plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy.
